# EUROPÄISCHE PATENTSCHRIFT

(11) **EP 2 813 449 B1**
(45) Veröffentlichungstag und Bekanntmachung des Hinweises auf die Patenterteilung: **02.12.2015**
(21) Anmeldenummer: 14168342.5
(22) Anmeldetag: 14.05.2014
(51) Int. Cl.: B65G 57/06, B65G 57/24

(54) **Jalousieverschluss mit zwei gegenläufigen Jalousien und hiermit ausgestatteter Jalousiekopf zum Umgang mit Artikeln**
Roller shutter having two counter-rotating blinds and handling head equipped therewith for handling articles
Fermeture à jalousie dotée de deux jalousies opposées et tête de jalousie équipée de celle-ci pour la gestion d'articles

(30) Priorität: 10.06.2013 DE 102013106013
(43) Veröffentlichungstag der Anmeldung: 17.12.2014
(73) Patentinhaber: Krones Aktiengesellschaft, 93073 Neutraubling (DE)
(72) Erfinder: Haas, Johann, 93073 Neutraubling (DE)
(74) Vertreter: Benninger, Johannes

(56) Entgegenhaltungen:
- EP-A1- 2 441 712
- WO-A2-2006/000847

## Beschreibung

Die vorliegende Erfindung betrifft einen Jalousieverschluss gemäß dem Oberbegriff des Anspruchs 1 und einen mit einem solchen Jalousieverschluss ausgestatteten Jalousiekopf zum Umgang mit Artikeln gemäß dem Oberbegriff des Anspruchs 2.

Zum Umgang mit einzelnen oder mehreren, beispielsweise zu Artikellagen gruppiert, relativ zueinander angeordneten Artikeln, die beispielsweise zu einem Stapel aus mehreren, jeweils durch eine Artikellage gebildeten Stapellagen aufzustapeln oder von einem Stapel zu entstapeln sein können, wie dies beispielsweise beim Palettieren oder Entpalettieren der Fall sein kann, sind in der Verpackungstechnik so genannte Palettierköpfe bekannt.

Ein Palettierkopf umfasst im Wesentlichen einen Tragrahmen mit:
- zwei gegenüberliegenden Schmalseiten,
- zwei die gegenüberliegenden Schmalseiten beidseitig miteinander verbindenden, gegenüberliegende Stirnseiten,
- einer die beiden gegenüberliegenden Schmalseiten und die beiden gegenüberliegende Stirnseiten miteinander verbindenden Oberseite, an der oder an wenigstens einer der beiden Schmalseiten eine Verbringungsvorrichtung, beispielsweise mindestens ein an einem horizontalen Querträger verfahrbarer Schlitten oder ein Hubwerk oder ein mehrachsig beweglicher Roboterarm, um nur einige denkbare Ausgestaltungen zu nennen, angreift, mit welcher der Palettierkopf von einer Beladeposition in eine Entladeposition bewegt werden kann,
- einer ebenfalls die beiden gegenüberliegenden Schmalseiten und die beiden gegenüberliegende Stirnseiten miteinander verbindenden Unterseite mit einer vermittels einer oder zweier an den Schmalseiten beweglich geführter Jalousien eines Jalousieverschlusses verschließ bzw. abdeckbaren Be- und Entladeöffnung, die in geschlossenem Zustand von der einen Jalousie vollständig oder von den zwei gegenläufig beweglichen Jalousien beispielsweise jeweils zur Hälfte abgedeckt ist und die in geöffnetem Zustand frei liegt,
- einem zwischen der Ober- und der Unterseite, den beiden Schmalseiten und den beiden Stirnseiten beherbergten und durch die Be- und Entladeöffnung zugänglichen Aufnahmeraum für einen oder mehrere Artikel oder eine oder mehrere Artikellagen, wobei Artikel oder Artikellagen durch die Be- und Entladeöffnung in den Aufnahmeraum ein- und wieder ausgebracht werden,
sowie einen Jalousieverschluss mit
- mindestens einem Paar an den beiden gegenüberliegenden Schmalseiten beidseits der an der Unterseite befindlichen Be- und Entladeöffnung voneinander beabstandet angeordnete Führungseinrichtungen zur beweglichen Führung einer oder zweier Jalousien an den beiden Schmalseiten,
- einer oder zwei Jalousien bestehend aus mehreren parallel zueinander angeordneten Lamellen, die jeweils mit ihren Enden in an den beiden gegenüberliegenden Schmalseiten angeordnete Führungseinrichtungen eingehängt bzw. mit diesen verbunden und entlang einer durch die Führungseinrichtungen vorgegebenen Führungsbahn zwischen zwei dem geschlossenen und dem geöffneten Zustand der Be- und Entladeöffnung entsprechenden Stellungen, einer Offenstellung, bei dem die Be- und Entladeöffnung frei durchgängig ist, und einer Schließstellung, bei der die Be- und Entladeöffnung durch die eine oder die zwei gegenläufigen Jalousien geschlossen ist, beweglich sind, wobei in der Schließstellung in den Aufnahmeraum eingebrachte Artikel oder Artikellagen von dem einen oder zwei gegenläufigen, in der Schließstellung beispielsweise in der Mitte der Be- und Entladeöffnung aneinander anstoßenden Jalousien getragen werden,
und
- mindestens eine auf den wenigstens einen Jalousieverschluss einwirkenden, beispielsweise elektromotorisch oder pneumatisch oder via der Verbringungsvorrichtung antreib- oder betätigbare Betätigungseinrichtung zur Bewegung der mindestens einen Jalousie des Jalousieverschlusses von deren Offenstellung in deren Schließstellung und umgekehrt.

Um einen Palettierkopf zu beladen, wird der Palettierkopf in Offenstellung des Jalousieverschlusses mit seiner Be- und Entladeöffnung über einer beispielsweise auf einer Bereitstellungsfläche bereitstehende Artikellage oder über einer zuoberst auf einem zu entstapelnden Stapel aufliegende Stapellage abgesenkt, und der Jalousieverschluss unter der Artikel- oder Stapellage geschlossen. Dadurch fährt die mindestens eine Jalousie des Jalousieverschlusses unter die Artikel- oder Stapellage, schließt dadurch den Aufnahmeraum und der Palettierkopf ist beladen.

Um einen Palettierkopf zu entladen, wird der Jalousieverschluss unter der im Aufnahmeraum befindlichen Artikellage weggezogen, wodurch die Artikellage durch die Be- und Entladeöffnung aus dem Aufnahmeraum herausfällt.

Neben der beschriebenen Ausgestaltung eines Palettierkopfs ist eine nachfolgend als Jalousiekopf bezeichnete Ausgestaltung bekannt. Ein grundsätzlich gleich wie ein Palettierkopf aufgebauter Jalousiekopf unterscheidet sich dabei von einem Palettierkopf dadurch, dass ein Jalousiekopf im Gegensatz zu einem Palettierkopf anstelle einer gemeinsamen Be- und Entladeöffnung eine an seiner Unterseite angeordnete, vermittels einer oder zweier gegenläufiger Jalousien eines Jalousieverschlusses verschließbare Entladeöffnung sowie eine an zumindest einer seiner Stirnseiten angeordnete Beladeöffnung aufweist. Der Aufbau und die Anordnung des Jalousieverschlusses an der bei einem Jalousiekopf lediglich als Entladeöffnung dienenden Öffnung an der Unterseite entspricht dabei grundsätzlich dem eines Palettierkopfs. Die Steuerung des Öffnens und Schließens dieser Öffnung vermittels des Jalousieverschlusses hingegen ist unterschiedlich, da bei einem Palettierkopf die Öffnung an der Unterseite sowohl zum Beladen, als auch zum Entladen offen sein muss. Bei einem Jalousiekopf hingegen werden Artikel oder Artikellagen in der Beladeposition des Jalousiekopfs in Schließstellung des Jalousieverschlusses durch die Beladeöffnung in den Aufnahmeraum eingebracht, wobei sie über die geschlossene eine oder zwei gegenläufige Jalousien des Jalousieverschlusses geschoben werden, und in der Entladeposition des Jalousiekopfs durch die Entladeöffnung wieder aus diesem ausgebracht, wobei die eine oder die zwei gegenläufigen Jalousien des Jalousieverschlusses unter dem Artikel oder der Artikellage weggezogen werden.

Um einen möglichst schonenden Umgang mit Artikeln oder Artikellagen während des Beladens eines Palettierkopfs und während des Entladens eines Palettier- oder Jalousiekopfs sicherzustellen, ist bekannt, in Bewegungsrichtung von der Offenstellung in die Schließstellung gesehen, die Vorderkante der einen oder die beiden in der Schließstellung gegenüberliegenden Vorderkanten zweier gegenläufiger Jalousien durch einen keilförmigen Profilstab auszubilden, dessen in Schließstellung des Jalousieverschlusses dem Aufnahmeraum abgewandte Unterseite in einer von der Unterseite der Jalousie oder der Jalousien des Jalousieverschlusses in dessen Schließstellung gebildeten Ebene liegt, und dessen in Schließstellung des Jalousieverschlusses dem Aufnahmeraum zugewandte Oberseite von dessen der Jalousie zugewandter Hinterseite zur die Vorderkante der Jalousie bildenden Vorderseite von der Dicke der Jalousie abnehmend spitz zulaufend angeschrägt ist. Zum Beladen eines Palettierkopfs kann ein solcher Jalousieverschluss leichter unter Artikel oder Artikellagen unterfahren. Beim Entladen eines Palettier- oder Jalousiekopfs wird dadurch die Fallhöhe der im Aufnahmeraum befindlichen Artikel oder Artikellagen verringert vom vertikalen Abstand der dem Aufnahmeraum zugewandten Oberseite der einen oder der beiden gegenläufigen Jalousien des Jalousieverschlusses in Schließstellung zu einer Ablegefläche, auf welche die im Aufnahmeraum befindlichen Artikel abgelegt werden sollen, auf den vertikalen Abstand, den die dem Aufnahmeraum abgewandte Unterseite der einen oder der beiden gegenläufigen Jalousien des Jalousieverschlusses in Schließstellung zur Ablegefläche aufweist.

Durch WO 2006/000847 A2 ist ein Jalousieverschluss gemäß dem Oberbegriff des Anspruchs 1 sowie ein Palettierkopf bekannt, bei dem eine Be- und Entladeöffnung durch einen oder zwei Jalousien eines Jalousieverschlusses verschließbar ist. Kommen zwei Jalousien zum Einsatz sind diese gegenläufig, wobei sie in der Schließstellung in der Mitte der Entladeöffnung aneinander anstoßenden. Der eine oder die zwei Jalousien sind aus beidseitig der Be- und Entladeöffnung in Führungsschienen drehbar gelagerten Rundstäben gebildet, die im Bereich der Führungsschienen mittels Paaren von in Bewegungsrichtung der Jalousie abwechselnd versetzt zueinander angeordneten Kettengliedern gelenkig miteinander verbunden sind. Die abwechselnd versetzt zueinander angeordneten und mit jeweils einem Paar Rundstäben gelenkig verbundenen Kettenglieder bilden so eine einer Führungsschiene zugeordnete Führungskette. Gemeinsam bilden die auf einer Seite der Be- und Entladeöffnung angeordnete Führungskette und die Führungsschiene eine Führungseinrichtung. In Bewegungsrichtung von der Offenstellung in die Schließstellung gesehen ist die Vorderkante der einen oder der zwei Jalousien durch einen Profilstab gebildet, dessen Unterseite in einem Längsschnitt gesehen parallel zu den Führungsschienen verläuft und dessen Oberseite von der den Rundstäben zugewandter Hinterseite zur die Vorderkante der Jalousie bildenden Vorderseite vom Durchmesser der Rundstäbe abnehmend spitz zulaufend angeschrägt ist, um unter Artikel unterfahren zu können.

Um die Fallhöhe gering zu halten ist ebenfalls bekannt, an der Vorderkante einer Jalousie oder an den in Schließstellung gegenüberliegenden Vorderkanten zweier gegenläufiger Jalousien eines Jalousieverschlusses spezielle Übergänge vorzusehen, die eingeklappt werden können.

Ein Jalousiekopf gemäß dem Oberbegriff des Anspruchs 2 ist aus EP 2441712 A bekannt. Nachteilig an den bekannten Lösungen ist, dass es insbesondere bei Jalousieköpfen und Jalousieverschlüssen mit zwei gegenläufigen Jalousien vorkommt, dass sich benachbarte Lamellen der Jalousie und/oder die an den Vorderkanten der gegenläufigen Jalousien angeordneten, keilförmigen Profilstäbe unter der Belastung so weit relativ zueinander durchbiegen, dass vor allem in der Mitte zwischen den Führungseinrichtungen ein Versatz zwischen belasteter Lamelle oder belastetem, keilförmigem Profilstab und unbelasteter Lamelle oder unbelastetem, keilförmigem Profilstab auftritt, der so groß ist, dass ein oder mehrere von durch die Beladeöffnung auf den Jalousieverschuss in Schließstellung aufgeschobener Artikel oder Artikellagen an einer in Bewegungsrichtung des Aufschiebens folgenden, unbelasteten Lamelle der Jalousien oder an einem in Bewegungsrichtung des Aufschiebens folgenden, eine Vorderkante einer der gegenläufigen Jalousien bildenden, keilförmigen Profilstab hängen bleiben und verhaken.

Der Erfindung liegt die Aufgabe zu Grunde, einen Jalousieverschluss mit zwei gegenläufigen Jalousien, deren Vorderkanten jeweils durch einen keilförmigen Profilstab gebildet sind, und einen mit einem solchen Jalousieverschluss ausgestatteten Jalousiekopf zu entwickeln, bei denen es zu keinem Verhaken von über die Jalousien geschobener Artikel oder Artikellagen mit keinem der keilförmigen Profilstäbe und/oder mit keiner der Lamellen der Jalousien kommt.

Die Aufgabe wird jeweils gelöst durch die Merkmale der unabhängigen Ansprüche. Weitere vorteilhafte Ausgestaltungen werden durch die Unteransprüche beschrieben.

Ein erster Gegenstand der Erfindung betrifft demnach einen Jalousieverschluss mit mindestens einem Paar einander gegenüberliegend voneinander beabstandet angeordneten Führungseinrichtungen, sowie zweier entlang einer durch die Führungseinrichtungen vorgegebenen Führungsbahn aus einer Schließstellung in eine Offenstellung und umgekehrt gegenläufig beweglicher Jalousien. In der Offenstellung klafft zwischen den beiden gegenläufig beweglichen Jalousien eine Entladeöffnung. In der Schließstellung ist die Entladeöffnung vollständig durch die beiden gegenläufig beweglichen Jalousien geschlossen. Die Jalousien können sich in der Schließstellung in der Mitte der Entladeöffnung treffen, oder sie können sich außermittig treffen.

Bei zwei gegenläufig beweglichen Jalousien eines Jalousieverschlusses bewegen diese sich gegensinnig. Bewegt sich beispielsweise die in Offenstellung des Jalousieverschlusses der Entladeöffnung zugewandte Vorderkante der einen Jalousie in einer ersten Richtung, um aus der Offenstellung in die Schließstellung zu gelangen, so bewegt sich die in Offenstellung des Jalousieverschlusses der Entladeöffnung zugewandte Vorderkante der verbleibenden, zweiten Jalousie in genau entgegengesetzter, zweiter Richtung. Demnach bewegen sich die Vorderkanten der beiden Jalousien eines Jalousieverschlusses mit zwei gegenläufig beweglichen Jalousien aus der Offenstellung in die Schließstellung aufeinander zu und aus der Schließstellung in die Offenstellung voneinander weg.

Jede der Jalousien umfasst mehrere parallel verlaufende Lamellen. Jedes der beiden gegenüberliegenden Enden einer Lamelle ist an einer Führungseinrichtung eines Paars einander gegenüberliegend voneinander beabstandet angeordneter Führungseinrichtungen angeordnet.

Dabei können die gegenüberliegend voneinander beabstandet angeordneten Führungseinrichtungen Führungsschienen umfassen, in welchen die Jalousien mit den Enden ihrer Lamellen entlang der durch den Verlauf der Führungsschienen vorgegebenen Führungsbahn aus einer Schließstellung in eine Offenstellung und umgekehrt gegenläufig beweglich gelagert sein können. Die Lamellen der Jalousien sind dabei im Bereich ihrer Enden, beispielsweise innerhalb der Führungsschienen derart gelenkig miteinander verbunden, dass die durch sie gebildeten Jalousien dem Verlauf der Führungsbahn zu folgen in der Lage sind.

Bei einer zusätzlichen oder alternativen Ausgestaltung können die Führungseinrichtungen beispielsweise umlaufende Ketten oder Kettensegmente umfassen, an denen die Lamellen mit ihren Enden oder im Bereich ihrer Enden befestigt sind. Handelt es sich bei den Lamellen um Rundstäbe, so können die Lamellen mit jedem ihrer beiden Enden bzw. im Bereich jedes ihrer beiden Enden um deren quer zwischen den gegenüberliegend voneinander beabstandet angeordneten Führungseinrichtungen verlaufende Längsachse drehbar an jeweils einer Kette oder einem Kettensegment der beiden gegenüberliegend voneinander beabstandet angeordneten Führungseinrichtungen eines Paars Führungseinrichtungen gelagert sein. Denkbar ist auch, dass die Enden der Lamellen bzw. die Bereiche der Enden der Lamellen Teile der Ketten oder Kettensegmente bilden, die untereinander gelenkig verbunden sind. Die Ketten oder Kettensegmente können zumindest abschnittsweise in zuvor erwähnten Führungsschienen verlaufend angeordnet sein. Alternativ oder zusätzlich können die Ketten oder Kettensegmente über zumindest teilweise angetriebene Umlenk- oder Aufwickelrollen verlaufen. Zumindest abschnittsweise kann hierbei der Verlauf einer Kette oder eines Kettensegments zwischen zwei Umlenk- und/oder Aufwickelrollen den Verlauf der Führungsbahn vorgeben.

Einem Paar aus gegenüberliegend voneinander beabstandet angeordneten Führungseinrichtungen zugeordneten Ketten oder Kettensegmenten ist dabei eine der beiden gegenläufig beweglichen Jalousien zugeordnet. Sind Ketten oder Kettensegmente als Führungseinrichtungen oder als Teile von Führungseinrichtungen vorgesehen ergeben sich dadurch zwei Paar Ketten oder Kettensegmente für die beiden gegenläufig beweglichen Jalousien des Jalousieverschlusses.

Umfassen die Führungseinrichtungen ausschließlich beispielsweise über zwei oder mehrere Umlenk- und/oder Aufwickelrollen, von denen wenigsten eine angetrieben sein kann, verlaufende Ketten oder Kettensegmente, so können die Lamellen durch die Führungseinrichtungen in Richtung der Führungsbahn gelenkig miteinander verbunden sein. Alternativ können zumindest die Enden der Lamellen bzw. die Bereiche der Enden der Lamellen Teil der Führungseinrichtungen sein, diese umfassen oder von diesen umfasst werden.

Jede der beiden Jalousien weist einen keilförmigen Profilstab auf. Die keilförmigen Profilstäbe bilden oder umfassen die zumindest in der Offenstellung gegenüber der Entladeöffnung einander zugewandten Vorderkanten der beiden gegenläufig beweglichen Jalousien.

Der Jalousieverschluss zeichnet sich dadurch aus, dass, zumindest frei von Durchbiegung idealisiert betrachtet, die Unterseite eines ersten, eine Vorderkante einer ersten Jalousie bildenden oder umfassenden, keilförmigen Profilstabs in einer von der Unterseite zumindest einer Partie der Jalousien des Jalousieverschlusses in dessen Schließstellung gebildeten Ebene liegt und dessen Oberseite von dessen den Lamellen der ersten Jalousie zugewandter Hinterseite zur die Vorderkante der ersten Jalousie bildenden Vorderseite von der Dicke der Jalousie abnehmend beispielsweise spitz zulaufend angeschrägt ist.

Der Jalousieverschluss zeichnet sich außerdem dadurch aus, dass, zumindest frei von Durchbiegung idealisiert betrachtet, die Oberseite eines zweiten, eine Vorderkante einer zweiten Jalousie bildenden oder umfassenden, keilförmigen Profilstabs zumindest in der Schließstellung in einer von der Oberseite zumindest einer Partie der Jalousien des Jalousieverschlusses in dessen Schließstellung gebildeten Ebene liegt und dessen Unterseite von dessen den Lamellen der zweiten Jalousie zugewandter Hinterseite zur die Vorderkante der zweiten Jalousie bildenden Vorderseite von der Dicke der Jalousie abnehmend beispielsweise spitz zulaufend angeschrägt ist.

Der Jalousieverschluss zeichnet sich ferner dadurch aus, dass in der Schließstellung die beiden keilförmigen Profilstäbe einander überlappen.

In einem Längsschnitt parallel zur Bewegungsrichtung aus der Schließstellung in die Offenstellung und umgekehrt gesehen befinden sich die Vorderkanten der beiden Jalousien in der Schließstellung dabei zwischen der Vorder- und Hinterseite des keilförmigen Profilstabs der jeweils anderen Jalousie.

Die angeschrägte Oberseite des ersten keilförmigen Profilstabs kann in der Schließstellung mit der angeschrägten Unterseite des zweiten keilförmigen Profilstabs in Kontakt stehen.

Indem die beiden jeweils eine Vorderkante der beiden Jalousien bildenden oder umfassenden, keilförmigen Profilstäbe einander in der Schließstellung überlappen, stützen sie sich gleichzeitig gegenseitig, wodurch ein Verhaken von Artikeln oder Artikellagen mit einem der beiden keilförmigen Profilstäbe aufgrund unterschiedlicher Durchbiegungen der beiden keilförmigen Profilstäbe beim Überschieben über die Jalousien des Jalousieverschlusses verhindert wird.

Durch die unterschiedliche, asymmetrische Anschrägung der beiden Profilstäbe, bei welcher unterschiedlicher, asymmetrischen Anschrägung der erste Profilstab an seiner Oberseite und der zweite Profilstab an seiner Unterseite angeschrägt ist, bilden die beiden in der Schließstellung überlappenden, keilförmigen Profilstäbe gleichzeitig eine zumindest annähernd spaltfreie, ebene Oberfläche, über welche Artikel oder Artikellagen frei von der Gefahr eines Verhakens und Umkippens über einen derart ausgeführten Jalousieverschluss beispielsweise durch eine seitliche Beladeöffnung in einen Aufnahmeraum eines Jalousiekopfs geschoben werden können.

Jeder der beiden keilförmigen Profilstäbe kann zumindest ähnlich einer Lamelle ebenfalls mit seinen beiden entfernten Enden oder im Bereich seiner beiden Enden an gegenüberliegenden Führungseinrichtungen angeordnet und zumindest mit seinen beiden entfernten Enden oder im Bereich seiner beiden Enden mit einer benachbarten Lamelle der jeweiligen Jalousie des Jalousieverschlusses, deren Vorderkante er bildet, gelenkig verbunden sein.

Jeder der beiden keilförmigen Profilstäbe kann mit einer benachbarten Lamelle der jeweiligen Jalousie des Jalousieverschlusses, deren Vorderkante er bildet, zusätzlich an mindestens einer Stelle zwischen seinen an den Führungseinrichtungen angeordneten Enden gelenkig verbunden sein.

Benachbarte Lamellen der Jalousien des Jalousieverschlusses können untereinander zusätzlich an mindestens einer Stelle zwischen ihren an den Führungseinrichtungen angeordneten Enden gelenkig miteinander verbunden sein.

Durch eine zwischen den Befestigungen bzw. Lagerungen der keilförmigen Profilstäbe und der Lamellen an bzw. im Bereich deren Enden an den gegenüberliegend voneinander beabstandet angeordneten Führungseinrichtungen vorgesehene gelenkige Verbindung der keilförmigen Profilstäbe und der Lamellen und/oder der Lamellen untereinander wird eine gegenseitige Stützung und Versteifung erhalten. Hierdurch wird ein Verhaken von Artikeln oder Artikellagen mit den keilförmigen Profilstäben und/oder den Lamellen der beiden gegenläufig beweglichen Jalousien des Jalousieverschlusses aufgrund unterschiedlicher Durchbiegungen benachbarter keilförmiger Profilstäbe und Lamellen und/oder Lamellen untereinander wirkungsvoll verhindert.

Die gelenkige Verbindung zwischen den Befestigungen bzw. Lagerungen der keilförmigen Profilstäbe und der Lamellen an bzw. im Bereich deren Enden an den gegenüberliegend voneinander beabstandet angeordneten Führungseinrichtungen kann beispielsweise durch eine Verzahnung verwirklicht sein, bei der benachbarte Lamellen der selben Jalousie und/oder ein keilförmiger Profilstab und eine benachbarte Lamelle der selben Jalousie beispielsweise über deren gesamte Erstreckung zwischen ihren jeweils an den gegenüberliegend voneinander beabstandet angeordneten Führungseinrichtungen vorgesehenen Enden gelenkig ineinandergreifen. Hierdurch werden unterschiedliche Durchbiegungen und damit Übergänge zwischen den einzelnen Jalousieelementen, zu denen sowohl die Lamellen der jeweiligen Jalousie, als auch der deren Vorderkante bildende oder umfassende keilförmige Profilstab zählen, praktisch vollständig vermieden.

So bestehen die Vorteile untereinander zwischen ihren an den gegenüberliegenden Führungseinrichtungen angeordneten Enden gelenkig verbundener, sowie gegebenenfalls verzahnter, unter dem Begriff Jalousieelemente zusammengefasster Lamellen und/oder die Vorderkanten der beiden gegenläufig beweglichen Jalousien des Jalousieverschlusses bildender oder umfassender, keilförmiger Profilstäbe ein- und derselben Jalousie allgemein darin, dass es keine Übergänge, sowohl hinsichtlich des beim Stand der Technik vorhandenen Abstands zwischen benachbarten Jalousieelementen ein- und derselben Jalousie, als auch hinsichtlich unterschiedlicher Durchbiegungen benachbarter, belasteter und unbelasteter Jalousieelemente zwischen den einzelnen Jalousieelementen jeder der beiden gegenläufig beweglichen Jalousien des Jalousieverschlusses und sogar zwischen den beiden, jeweils eine Vorderkante unterschiedlicher Jalousien der beiden gegenläufig beweglichen Jalousien des Jalousieverschlusses bildender keilförmiger Profilstäbe mehr gibt und somit Artikel oder Artikellagen nicht mehr hängen bleiben können. Die Betriebssicherheit bei hohen Geschwindigkeiten ist damit im Vergleich zum Stand der Technik höher, bei dem die Jalousieelemente zwischen den Führungseinrichtungen nicht miteinander verbunden sind. Dadurch kann auch mit sehr kritischen Artikeln, wie etwa schweren Gebinden, beispielsweise Getränkekisten, umgegangen werden, was beim Stand der Technik bislang nicht möglich ist. Die verringerte Geräuschentwicklung einhergehend mit der Erfüllung hoher Arbeitsplatzsicherheitsbedürfnisse ist unter anderem dadurch bedingt, dass die einzelnen Jalousieelemente zwischen ihren Enden beim Bewegen der Jalousien im Falle einer gegenseitigen Verzahnung nicht mehr aneinander schlagen können oder im Falle einer oder mehrerer über die Länge der einzelnen Jalousieelemente voneinander beabstandeter gelenkiger Verbindungen untereinander dies nur noch mit im Vergleich zum Stand der Technik verringerter freier Länge und damit geringerer Schallenergie zu tun in der Lage sind.

Die Verzahnung kann mit verschiedenen Zahnformen ausgeführt werden. So kann die Verzahnung beispielsweise in der Draufsicht rechteckig oder dreieckig spitz zulaufend ausgeführt sein.

Die ineinandergreifenden Zähne zweier benachbarter Jalousieelemente ein- und derselben Jalousie können wenigstens bei einer Jalousie durch eine durchgängige Gelenkachse gelenkig miteinander verbunden sein.

Alternativ können die ineinandergreifenden Zähne zweier benachbarter Jalousieelemente ein- und derselben Jalousie wenigstens bei einer Jalousie durch jeweils nur zwischen einem oder mehreren Paaren ineinandergreifender Zähne wirkende Gelenkachsenabschnitte gelenkig miteinander verbunden sein.

Neben den bereits beschriebenen Vorteilen weist die Ausführung einer Jalousie eines Jalousieverschlusses mit einer Verzahnung zumindest eines Teils deren Jalousieelemente gegenüber dem Stand der Technik die Vorteile:
- einer höheren Stabilität,
- eines erhöhten Widerstandsmoments gegen Durchbiegung einhergehend mit einer größeren möglichen Spannweite und damit breiteren Be- und Entladeöffnungen durch die gegenseitige Stützung von durch Artikel belasteter und unbelasteter Lamellen,
- einer geringeren Geräuschentwicklung, sowie
- je nach Ausgestaltung einer Verringerung oder gar einen Entfall von störenden Übergängen zwischen den Lamellen und/oder den keilförmigen Profilstäben
auf.

Bei den Lamellen kann es sich um beispielsweise plattenartige oder als Hohlprofile ausgestaltete Profilstäbe handeln, die vermittels einer an ihren jeweils einer benachbarten Lamelle oder der Hinterseite eines benachbarten, keilförmigen Profilstabs zugewandten Schmalseite angeordneten Verzahnung ineinandergreifen.

Zumindest in eine Oberfläche der Jalousieelemente können wenigstens bei einer Jalousie zur Verringerung von Reibungskräften zwischen Artikeln und den eine Jalousie bildenden Jalousieelemente Lagermittel, wie beispielsweise um zumindest parallel zur Erstreckung der Jalousieelemente zwischen deren beiden entfernten Enden verlaufende Achsen drehbare Rollen und/oder Kugeln eingearbeitet sein.

Alternativ kann es sich bei zumindest einem Teil der Lamellen wenigstens einer Jalousie um als Rollen wirkende, sowohl beidseitig mit den Führungselementen drehbar verbundene, als auch zwischen den Führungseinrichtungen drehbar miteinander verbundene Rundstäbe handeln.

Beispielsweise können zumindest ein Teil der Jalousieelemente wenigstens bei einer Jalousie zwischen ihren mit den Führungselementen verbundenen Enden zusätzlich durch Kettenglieder jeweils paarweise gelenkig miteinander verbunden sein.

Die Führungseinrichtungen können jeweils eine Führungskette umfassen, an zumindest einem Teil deren Gelenkverbindungen jeweils eine von mehreren gemeinsam eine Jalousie des Jalousieverschlusses bildenden Lamellen mit einem ihrer Enden unverdrehbar befestigt oder drehbar gelagert sein kann.

Die Führungseinrichtungen können darüber hinaus mehrere Zahnräder oder Rollen umfassen, über welche die Führungskette jeweils umgelenkt und entlang der Führungsbahn geführt ist.

Alternativ oder zusätzlich können die Führungseinrichtungen jeweils eine entlang der Führungsbahn verlaufende Führungsschiene umfassen, in welcher vorzugsweise jeweils mindestens eine Führungskette verläuft.

Eine vorteilhafte Ausgestaltung der Erfindung sieht vor, dass die zwischen den Befestigungen bzw. Lagerungen der Jalousieelemente an bzw. im Bereich deren Enden an den gegenüberliegend voneinander beabstandet angeordneten Führungseinrichtungen vorgesehene zusätzliche gelenkige Verbindung rückensteif ausgeführt ist. Eine rückensteife Verbindung zeichnet sich dabei dadurch aus, dass sie ausgehend von einer in einer Ebene liegenden Jalousie eine gegenseitige Verdrehung benachbarter Jalousieelemente nur in einer ersten Richtung erlaubt. Bei dieser ersten Richtung handelt es sich um diejenige Richtung, der die gelenkige Verbindung folgt, wenn zunächst an einem die Vorder- oder die Hinterkante einer Jalousie bildenden Jalousieelement begonnen wird, dieses Jalousieelement an der eben daliegenden Jalousie nach oben weg zu ziehen, beispielsweise bei einem beginnenden Aufrollen der Jalousie. In entgegengesetzter, zweiter Richtung ist die gelenkige Verbindung bei der rückensteifen Ausführung demgegenüber gesperrt. Mit anderen Worten erlaubt eine rückensteife Ausführung der gelenkigen Verbindung ausgehend von einer eben daliegenden Jalousie, bei der die Tangenten von gemeinsam eine beispielsweise einem Aufnahmeraum zugewandte Oberfläche der Jalousie bildenden Oberflächenpartien benachbarter Jalousieelemente einen Winkel von 180° einschließen, eine Gelenkigkeit im theoretischen Bereich zwischen 0° und 180°, wohingegen der Bereich von über 180° bis 360° gesperrt ist. Im praktischen Fall können 0° dabei nur durch eine doppelte gelenkige Verbindung verwirklicht werden, für die jedoch auch das gesagte bei einer rückensteifen Ausführung gilt. Hierdurch wird eine nochmalige Verbesserung einer gegenseitigen Versteifung der beispielsweise zumindest im Bereich einer vermittels einer Jalousie nur zum Teil zu verschließenden Entladeöffnung nur seitlich an den Führungseinrichtungen in vertikaler Richtung abgestützten Jalousieelemente untereinander erhalten, ohne ein Aufrollen beim seitlichen Wegziehen zu ver- oder behindern. Vor allem im Bereich der Vorderkante einer Jalousie werden hierdurch die Durchbiegung der gesamten Jalousie, als auch Durchbiegungsunterschiede zwischen benachbarten Jalousieelementen merklich verringert.

Der zweite keilförmige Profilstab kann dabei derart beweglich, beispielsweise um eine parallel zur Erstreckung der Lamellen verlaufende Achse schwenkbar, an den gegenüberliegenden Führungseinrichtungen und/oder an einer benachbarten Lamelle angeordnet sein, dass sich dessen über dessen Oberseite mit dessen Hinterseite verbundene, die Vorderkante der zweiten Jalousie bildende Vorderseite wenigstens unter der Gewichtskraft von vermittels des Jalousieverschlusses zumindest zeitweilig getragenen Artikeln beim Verlassen der Schließstellung um den zwischen seiner Ober- und Unterseite eingeschlossenen Winkel um die Hinterseite geschwenkt absenken kann. Dadurch wird seitens der zweiten Jalousie die selbe geringstmögliche Fallhöhe beim Ablegen von Artikeln oder Artikellagen erhalten, wie seitens der ersten Jalousie, bei welcher die Oberseite entsprechend des eingeschlossenen Winkels von der Hinterseite zur Vorderseite abfallend angeschrägt ist.

Ein zweiter Gegenstand der Erfindung betrifft einen mit einem zuvor genannten Jalousieverschluss ausgestatteten Jalousiekopf. Der Jalousiekopf umfasst einen von einer Oberseite, einer Unterseite sowie die Ober- und die Unterseite miteinander verbindenden, gegenüberliegenden Schmal- und Stirnseiten umgebenen Aufnahmeraum für einen oder mehrere Artikel oder Artikellagen. Wenigstens eine der Stirnseiten weist eine Beladeöffnung auf. Die Unterseite weist eine Entladeöffnung auf. Zumindest die Entladeöffnung ist vermittels der beiden gegenläufig beweglichen Jalousien des Jalousieverschlusses verschließbar. Die Entladeöffnung ist hierbei geöffnet und frei durchgängig, befinden sich die beiden gegenläufig beweglichen Jalousien des Jalousieverschlusses in deren Offenstellung. Die Entladeöffnung ist geschlossen, befinden sich die beiden gegenläufig beweglichen Jalousien des Jalousieverschlusses in deren Schließstellung. Führungselemente des Jalousieverschlusses sind beidseits der Entladeöffnung einander gegenüberliegend angeordnet. Vorzugsweise an der Oberseite des Jalousiekopfs greift eine Verbringungsvorrichtung, bevorzugt ein mehrachsiger Roboterarm an.

Ein oder mehrere, beispielsweise zu einer Artikellage oder einer Stapellage gruppierte Artikel werden in den Aufnahmeraum eingebracht, indem sie durch die Beladeöffnung hindurch über die in Schließstellung befindlichen Jalousien des Jalousieverschlusses geschoben werden.

Ein oder mehrere in den Aufnahmeraum eingebrachte Artikel werden während des Umgangs mit diesen in der Schließstellung der Jalousie des Jalousieverschlusses von diesen getragen.

Durch ein Wegziehen der beiden gegenläufig beweglichen Jalousien des Jalousieverschlusses unter dem mindestens einen in den Aufnahmeraum eingebrachten Artikel wird der Jalousiekopf entladen.

Der Jalousiekopf zeichnet sich dadurch aus, dass, zumindest frei von Durchbiegung idealisiert betrachtet, die in Schließstellung des Jalousieverschlusses dem Aufnahmeraum abgewandte Unterseite eines ersten, eine Vorderkante einer ersten Jalousie bildenden keilförmigen Profilstabs in einer von der Unterseite zumindest einer Partie der Jalousien des Jalousieverschlusses in dessen Schließstellung gebildeten Ebene liegt und dessen in Schließstellung des Jalousieverschlusses dem Aufnahmeraum zugewandte Oberseite von dessen den Lamellen der ersten Jalousie zugewandter Hinterseite zur die Vorderkante der ersten Jalousie bildenden Vorderseite von der Dicke der Jalousie abnehmend beispielsweise spitz zulaufend angeschrägt ist.

Der Jalousiekopf zeichnet sich außerdem dadurch aus, dass, zumindest frei von Durchbiegung idealisiert betrachtet, die in Schließstellung des Jalousieverschlusses dem Aufnahmeraum zugewandte Oberseite eines zweiten, eine Vorderkante einer zweiten Jalousie bildenden keilförmigen Profilstabs in einer von der Oberseite zumindest einer Partie der Jalousien des Jalousieverschlusses in dessen Schließstellung gebildeten Ebene liegt und dessen in Schließstellung des Jalousieverschlusses dem Aufnahmeraum abgewandte Unterseite von dessen den Lamellen der zweiten Jalousie zugewandter Hinterseite zur die Vorderkante der zweiten Jalousie bildenden Vorderseite von der Dicke der Jalousie abnehmend beispielsweise spitz zulaufend angeschrägt ist.

Der Jalousiekopf zeichnet sich ferner dadurch aus, dass in der Schließstellung die beiden keilförmigen Profilstäbe einander überlappen.

Vorzugsweise befindet sich die Beladeöffnung auf derjenigen Seite der Entladeöffnung, in welche die zweite Jalousie mit dem deren Vorderkante bildenden, zweiten keilförmigen Profilstab, dessen dem Aufnahmeraum zugewandte Oberseite zumindest frei von Durchbiegung idealisiert betrachtet in einer von der Oberseite zumindest einer Partie der Jalousien des Jalousieverschlusses in dessen Schließstellung gebildeten Ebene liegt, aus der Schließstellung in die Offenstellung zurückgezogen wird. Hierdurch wird ein Verhaken noch wirkungsvoller verhindert, weil sich hierbei beim Überschieben von Artikeln der die Vorderkante der zweiten Jalousie bildende, zweite keilförmige Profilstab auf dem in Schließstellung des Jalousieverschlusses darunter befindlichen, überlappenden und die Vorderkante der ersten Jalousie des Jalousieverschlusses bildenden, ersten keilförmigen Profilstab abstützen kann, so dass es zu keiner unterschiedlichen Durchbiegung zwischen den beiden Profilstäben kommt.

Der Jalousiekopf kann außerdem alle oder einen Teil der Merkmale eines zuvor beschriebenen Jalousieverschlusses aufweisen.

Der Jalousiekopf kann darüber hinaus alle oder einen Teil der Merkmale eingangs beschriebener Palettier- und Jalousieköpfe aufweisen.

Wichtig ist hervorzuheben, dass eine gegebenenfalls vorgesehene Betätigungsvorrichtung für den Jalousieverschluss wahlweise Bestandteil des Jalousiekopfs oder des Jalousieverschlusses sein kann. Alternativ kann das Öffnen und Schließen der zwei gegenläufig beweglichen Jalousien des Jalousieverschlusses vermittels der Verbringungsvorrichtung betätigt sein.

Vorteile gegenüber dem Stand der Technik sind unter Anderem eine wesentlich verringerte Geräuschentwicklung beim Öffnen und Schließen der zwei Jalousien des Jalousieverschlusses einhergehend mit einer verringerten Lärmentwicklung am Aufstellungsort und damit der Erfüllung steigender Arbeitsplatzsicherheitsbedürfnisse. Dies wird zum Einen dadurch erhalten, dass durch die asymmetrische, unterschiedliche Anschrägung der beiden die Vorderkanten der beiden gegenläufig beweglichen Jalousien des Jalousieverschlusses bildenden keilförmigen Profilstäbe diese nicht wie beim Stand der Technik beim Schließen des Jalousieverschlusses frontal aneinanderprallen, sondern sich gegebenenfalls gegenseitig abbremsend an ihren abgeschrägten Flächen einander überlappend zum Stillstand kommen. Zum anderen wird dies durch die zusätzliche gegenseitige gelenkige Verbindung benachbarter Jalousieelemente zwischen deren an den gegenüberliegenden Führungseinrichtungen angeordneten Enden erhalten, wodurch die Jalousieelemente beim Beschleunigen oder Abbremsen der Jalousien nicht mehr wie beim Stand der Technik aneinander klatschen können.

Weitere Vorteile gegenüber dem Stand der Technik sind eine größere mögliche Spannweite der Jalousien des Jalousieverschlusses einhergehend mit einer größeren maximalen Breite der Entladeöffnungen von Jalousieköpfen. Dies wird durch die gegenseitige Stützung, sowohl der beiden, die einander in Schließstellung des Jalousieverschlusses überlappenden Vorderkanten der beiden gegenläufig beweglichen Jalousien des Jalousieverschlusses bildenden keilförmigen Profilelemente erhalten, als auch zusätzlich durch die gegenseitige Stützung vermittels der zusätzlichen gelenkigen Verbindung der Jalousieelemente zwischen deren Enden untereinander.

Zusätzliche Vorteile gegenüber dem Stand der Technik sind eine höhere Belastbarkeit der in den Aufnahmeraum eingebrachte Artikel tragenden zwei Jalousien sowie eine Steigerung der Betriebssicherheit durch eine deutliche Verringerung der Gefahr eines Verhakens sowie dadurch verursacht gegebenenfalls Umfallens von Artikeln, wodurch die Gefahr einer Beschädigung sowohl von Artikeln, als auch der Jalousieelemente der zwei gegenläufig beweglichen Jalousien des Jalousieverschlusses verringert wird, einhergehend mit einer verringerten Verletzungsgefahr für in der Nähe befindliches Bedienpersonal. Auch dieser Vorteil wird durch die zuvor geschilderten Maßnahmen erhalten.

Wichtig ist hervorzuheben, dass die beschriebenen Vorteile einhergehen mit einer Verringerung des Verschleißes und damit mit einer Erhöhung der Lebensdauer.

Im Folgenden sollen Ausführungsbeispiele die Erfindung und ihre Vorteile anhand der beigefügten Figuren näher erläutern. Darin bezeichnen gleiche Bezugszeichen gleiche oder gleich wirkende Elemente. Ferner werden der Übersicht halber nur Bezugszeichen in den einzelnen Figuren dargestellt, die für die Beschreibung der jeweiligen Figur erforderlich sind. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:
- Fig. 1: einen Längsschnitt durch einen Jalousieverschluss mit zwei gegenläufig beweglichen Jalousien in Schließstellung, deren Vorderkanten jeweils durch einander überlappende, asymmetrisch angeschrägte, keilförmige Profilstäbe gebildet oder umfasst sind.
- Fig. 2: das Detail A aus Fig. 1, welches eine gelenkige Verbindung zwischen zwei Jalousieelementen in einem Längsschnitt zeigt, bei welchen Jalousieelementen es sich um den ersten keilförmigen Profilstab der ersten, in Fig. 1 rechten Jalousie des in Fig. 1 dargestellten Jalousieverschlusses mit der zu diesem benachbarten, ersten Lamelle der selben Jalousie handelt.
- Fig. 3: einen Jalousieverschluss mit zwei gegenläufig beweglichen Jalousien in Schließstellung, deren Vorderkanten jeweils durch einander überlappende, asymmetrisch angeschrägte, keilförmige Profilstäbe gebildet sind, in einer perspektivischen Seitenansicht von oben.
- Fig. 4: das Detail B aus Fig. 3, welches die gegenseitige Überlappung der beiden jeweils eine Vorderkante der beiden gegenläufig beweglichen Jalousien bildenden oder umfassenden, keilförmigen Profilstäbe in Schließstellung des Jalousieverschlusses in einer perspektivischen Seitenansicht von oben zeigt.
- Fig. 5: einen Jalousieverschluss mit zwei gegenläufig beweglichen Jalousien in Schließstellung, deren Vorderkanten jeweils durch einander überlappende, asymmetrisch angeschrägte, keilförmige Profilstäbe gebildet sind, in einer Draufsicht teilweise im Röntgenblick.

- Fig. 6: ein erstes Ausführungsbeispiel eines einen Jalousieverschluss umfassenden, als Jalousiekopf ausgeführten Palettierkopfs in einer perspektivischen Ansicht.
- Fig. 7: ein zweites Ausführungsbeispiel eines einen Jalousieverschluss umfassenden, als Jalousiekopf ausgeführten Palettierkopfs in einer perspektivischen Ansicht.
- Fig. 8: ein drittes Ausführungsbeispiel eines einen Jalousieverschluss umfassenden, als Jalousiekopf ausgeführten und an einer Verbringungsvorrichtung angeordneten Palettierkopfs in einer perspektivischen Ansicht.
- Fig. 9: einen Teil einer an ihren gegenüberliegenden Enden an jeweils einer Führungseinrichtung befestigte und dazwischen untereinander rückensteif gelenkig miteinander verbundene Jalousieelemente umfassenden, ersten Jalousie nebst einem die Vorderkante der zweiten Jalousie eines Jalousieverschlusses bildenden oder umfassenden, keilförmigen Profilstabs nach der Erfindung in einem Längsschnitt.

Die dargestellten Ausführungsformen stellen lediglich Beispiele dar, wie ein erfindungsgemäßer Jalousieverschluss oder ein erfindungsgemäßer Jalousiekopf ausgestaltet sein können und stellen keine abschließende Begrenzung dar.

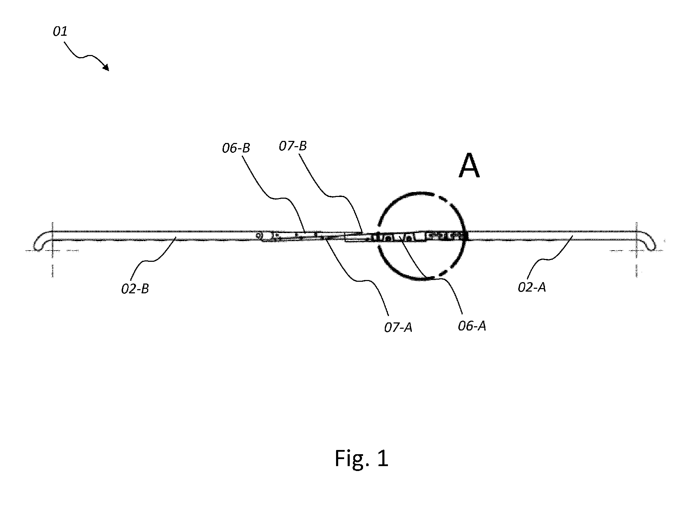

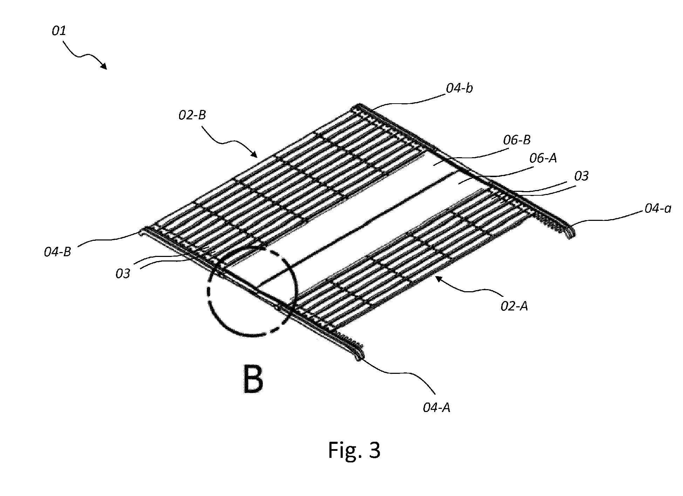

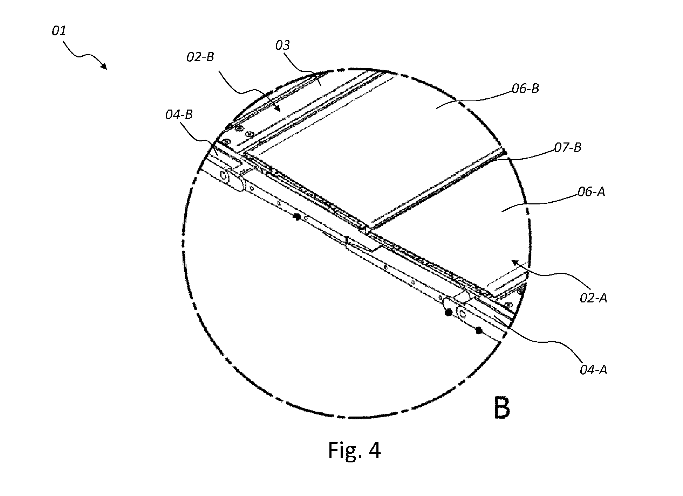

Ein in Fig. 1, Fig. 2, Fig. 3, Fig. 4, Fig. 5 und Fig. 9 ganz oder in Teilen dargestellter Jalousieverschluss 01 umfasst im Wesentlichen mindestens ein Paar einander gegenüberliegend voneinander beabstandet angeordnete Führungseinrichtungen 04-A, 04-a, 04-B, 04-b sowie zwei entlang einer durch die Führungseinrichtungen 04-A, 04-a, 04-B, 04-b vorgegebene Führungsbahn aus einer Schließstellung in eine Offenstellung und umgekehrt gegenläufig bewegliche Jalousien 02-A, 02-B.

Den beiden Jalousien 02-A, 02-B kann ein gemeinsames Paar gegenüberliegend voneinander beabstandet angeordnete Führungseinrichtungen 04 zugeordnet sein.

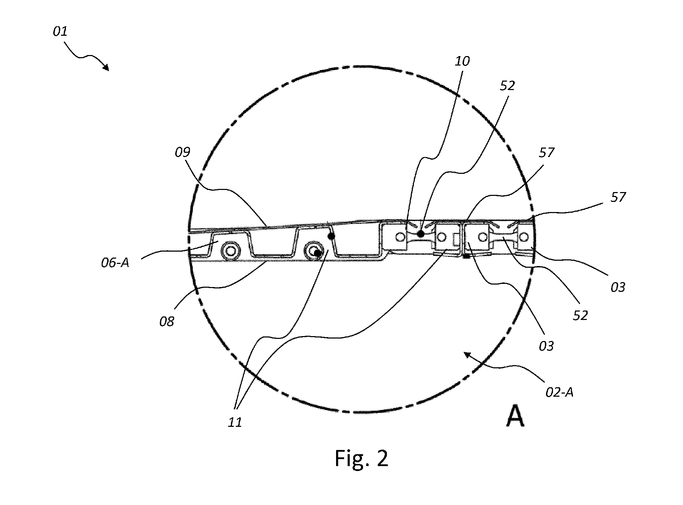

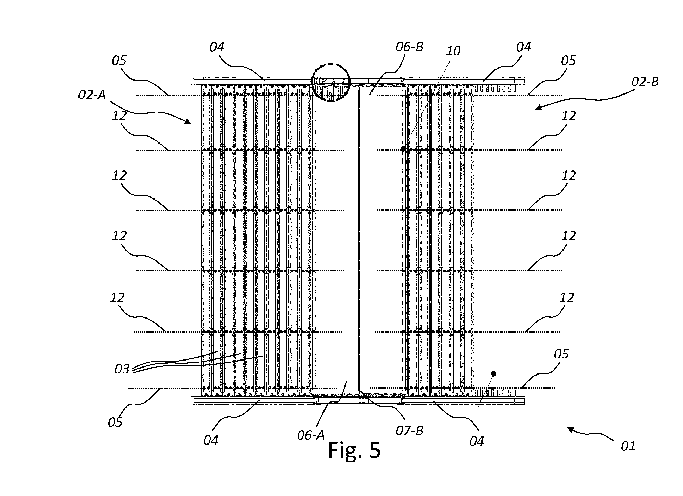

Alternativ kann wie in Fig. 2 und Fig. 5 erkennbar dargestellt jeder der Jalousien 02-A, 02-B ein eigenes Paar gegenüberliegend voneinander beabstandet angeordnete Führungseinrichtungen 04-A, 04-a, 04-B, 04-b zugeordnet sein. Eine erste Jalousie 02-A ist hierbei zwischen den gegenüberliegend voneinander beabstandet angeordneten Führungseinrichtungen 04-A, 04-a eines ersten Paares Führungseinrichtungen 04-A, 04-a und eine zweite Jalousie 02-B zwischen den gegenüberliegend voneinander beabstandet angeordneten Führungseinrichtungen 04-B, 04-b eines zweiten Paares Führungseinrichtungen 04-B, 04-b angeordnet.

Ist nachfolgend nicht ausdrücklich beispielsweise von einer speziellen Jalousie der beiden Jalousien 02-A, 02-B oder den diesen zugeordneten Führungseinrichtungen 04-A, 04-a, 04-B, 04-b oder einem einer der beiden Jalousien 02-A, 02-B zugeordneten keilförmigen Profilstab 06-A, 06-B die Rede, wird stellvertretend für eine oder beide der Jalousien ein allgemeines Bezugszeichen für die Jalousien 02 anstelle der speziellen Bezugszeichen für die Jalousien 02-A, 02-B in der Beschreibung, sowie stellvertretend in denjenigen Zeichnungen, in denen keine speziellen Bezugszeichen angeführt sind, als auch stellvertretend oder zusätzlich in den verbleibenden Zeichnungen verwendet. Das selbe gilt für die Verwendung eines allgemeinen Bezugszeichens für die den Jalousien 02 zugeordneten Führungseinrichtungen 04 oder einen einer speziellen Jalousie zugeordneten, keilförmigen Profilstab 06 stellvertretend für die speziellen Bezugszeichen für die Führungseinrichtungen 04-A, 04-a, 04-B, 04-b oder einen der jeweiligen Jalousie 02-A, 02-B zugeordneten, keilförmigen Profilstab 06-A, 06-B. Die allgemeinen Bezugszeichen haben jedoch auch in denjenigen Zeichnungen Bedeutung, in welchen ausschließlich spezielle Bezugszeichen angeführt sind. Die Ausführungen gelten auch für verbleibende, nicht explizit erwähnte allgemeine und spezielle Bezugszeichen.

Jede Jalousie 02 besteht aus mehreren an ihren distalen Enden 05 oder im Bereich ihrer distalen Enden 05 jeweils an einer der beiden gegenüberliegend voneinander beabstandet angeordneten Führungseinrichtungen 04 angeordneten, parallel zueinander verlaufenden Lamellen 03. Die Lamellen 03 sind untereinander zumindest im Bereich Ihrer Enden 05 gelenkig miteinander verbunden.

Jede der beiden Jalousien 02 weist einen keilförmigen Profilstab 06 auf. Jeder der keilförmigen Profilstäbe 06 bildet oder umfasst eine der Vorderkanten 07 der beiden gegenläufig beweglichen Jalousien 02.

Zumindest frei von Durchbiegung idealisiert betrachtet, liegt die Unterseite 08 eines ersten, eine Vorderkante 07-A einer ersten Jalousie 02-A bildenden oder umfassenden, keilförmigen Profilstabs 06-A in einer von der Unterseite zumindest einer Partie 56 der Jalousien 02 des Jalousieverschlusses 01 in dessen Schließstellung gebildeten Ebene. Die Oberseite 09 des ersten, die Vorderkante 07-A der ersten Jalousie 02-A bildenden oder umfassenden, keilförmigen Profilstabs 06-A ist von dessen den Lamellen 03 der ersten Jalousie 02-A zugewandter Hinterseite 10 zur die Vorderkante 07-A der ersten Jalousie 02-A bildenden Vorderseite hin von der Dicke der Jalousie 02 abnehmend angeschrägt.

Zumindest frei von Durchbiegung idealisiert betrachtet, liegt die Oberseite 09 eines zweiten, eine Vorderkante 07-B einer zweiten Jalousie 02-B bildenden oder umfassenden, keilförmigen Profilstabs 06-B zumindest in der Schließstellung in einer von der Oberseite zumindest einer Partie 57 der Jalousien 02 des Jalousieverschlusses 01 in dessen Schließstellung gebildeten Ebene. Die Unterseite 08 des zweiten, die Vorderkante 07-B der zweiten Jalousie 02-B bildenden oder umfassenden, keilförmigen Profilstabs 06-B ist von dessen den Lamellen 03 der zweiten Jalousie 02-B zugewandter Hinterseite 10 zur die Vorderkante 07-B der zweiten Jalousie 02-B bildenden Vorderseite hin von der Dicke der Jalousie 02 abnehmend angeschrägt.

In der Schließstellung des Jalousieverschlusses 01 überlappen die beiden keilförmigen Profilstäbe 06 einander. In einem Längsschnitt parallel zur Bewegungsrichtung aus der Schließstellung in die Offenstellung und umgekehrt gesehen befinden sich dabei die Vorderkanten 07 der beiden Jalousien 02 in der Schließstellung zwischen der Vorder- und Hinterseite 10 des keilförmigen Profilstabs 06 der jeweils anderen Jalousie 02.

Indem die beiden jeweils eine Vorderkante 07 der beiden Jalousien 02 bildenden oder umfassenden, keilförmigen Profilstäbe 06 einander in der Schließstellung überlappen, stützen sie sich in der Schließstellung gegenseitig. Hierdurch wird eine unterschiedliche Durchbiegung der beiden Profilstäbe 06 am Übergang zwischen den beiden Jalousien vermieden. Dadurch wird ein Verhaken von Artikeln 31 mit einem der beiden keilförmigen Profilstäbe 06 beim Überschieben über die Jalousien 02 des Jalousieverschlusses 01 verhindert.

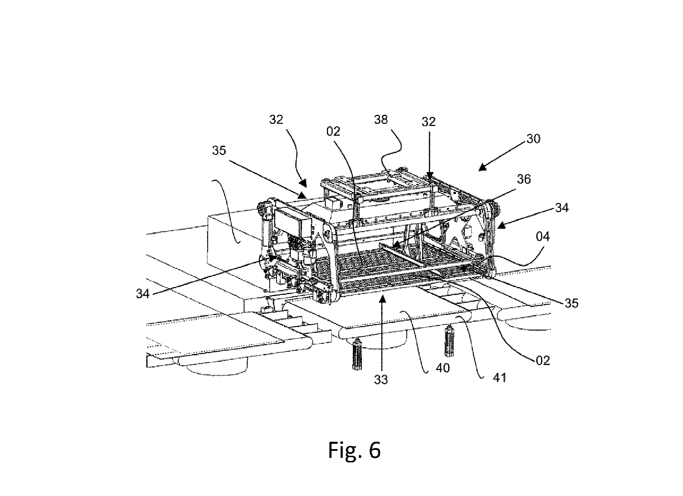

Durch die unterschiedliche, asymmetrische Anschrägung der beiden Profilstäbe 06, bei welcher unterschiedlicher, asymmetrischen Anschrägung der erste Profilstab 06-A an seiner Oberseite 09 und der zweite Profilstab 06-B an seiner Unterseite 08 angeschrägt ist, bilden die beiden in der Schließstellung überlappenden, keilförmigen Profilstäbe 06 gleichzeitig eine zumindest annähernd spaltfreie, ebene Oberfläche, über welche Artikel 31 frei von der Gefahr eines Verhakens und Umkippens über einen derart ausgeführten Jalousieverschluss 01 beispielsweise durch eine seitliche Beladeöffnung 39 in einen Aufnahmeraum 36 eines Jalousiekopfs 30 geschoben werden können (Fig. 6, Fig. 7, Fig. 8).

Der Begriff Profilstab bezeichnet hierbei ein- oder mehrteilige, profilierte Elemente mit jeweils durch eine oder mehrere, zumindest teilweise geschlossene und/oder teils offene Fläche gebildeten Oberseite 09 und Unterseite 08, welche die beschriebenen Eigenschaften hinsichtlich deren Orientierung aufweisen.

Die angeschrägte Oberseite 09 des ersten keilförmigen Profilstabs 06-A kann in der Schließstellung mit der angeschrägten Unterseite 08 des zweiten keilförmigen Profilstabs 06-B in Kontakt stehen.

Der zweite keilförmige Profilstab 06-B kann derart beweglich an den gegenüberliegenden Führungseinrichtungen 04 und/oder an einer benachbarten Lamelle 03 der zweiten Jalousie 02-B angeordnet sein, dass sich dessen über dessen Oberseite 09 mit dessen Hinterseite 10 verbundene, die Vorderkante 07-B der zweiten Jalousie 02-B bildende oder umfassende Vorderseite wenigstens unter der Gewichtskraft von vermittels des Jalousieverschlusses 01 zumindest zeitweilig getragenen Artikeln 31 beim Verlassen der Schließstellung um den zwischen seiner Oberseite 09 und Unterseite 08 eingeschlossenen Winkel um die Hinterseite 10 geschwenkt abzusenken in der Lage ist. Dadurch wird seitens der zweiten Jalousie 02-B die selbe geringstmögliche Fallhöhe beim Ablegen von Artikeln 31 erhalten, wie seitens der ersten Jalousie 02-A, bei welcher die Oberseite 09 entsprechend des eingeschlossenen Winkels von der Hinterseite 10 zur Vorderseite abfallend angeschrägt ist.

Jeder der beiden keilförmigen Profilstäbe 06-A, 06-B kann zumindest ähnlich einer Lamelle 03 ebenfalls mit seinen beiden entfernten Enden 05 oder im Bereich seiner beiden Enden 05 an gegenüberliegenden Führungseinrichtungen 04 angeordnet und zumindest mit seinen beiden entfernten Enden 05 oder im Bereich seiner beiden Enden 05 mit einer benachbarten Lamelle 03 der jeweiligen Jalousie 02-A, 02-B des Jalousieverschlusses 01, deren Vorderkante 07-A, 07-B er bildet, gelenkig verbunden sein.

Die Lamellen 03 und der Profilstab 06 einer Jalousie 02 bilden dabei die Jalousieelemente 11 der entsprechenden Jalousie 02.

Wenigstens bei einer der beiden Jalousien 02, bevorzugt bei beiden Jalousien 02, ist zumindest zwischen einem Teil deren Jalousieelementen 11, vorzugsweise zwischen allen deren Jalousieelementen 11, an mindestens einer in Fig. 5 in ihrer Lage quer zur Erstreckung der Lamellen 03 durch gestrichelte Linien veranschaulichten Stelle 12 zwischen ihren mit den Führungseinrichtungen 04 verbundenen Enden 05 bzw. dem in Fig. 5 durch gestrichelte Linien veranschaulichten Bereich ihrer Enden 05 eine zusätzliche gelenkige Verbindung vorgesehen.

Die zusätzliche gelenkige Verbindung zwischen wenigstens eines Teils der Jalousieelemente 11 zumindest einer Jalousie 02 kann beispielsweise durch Kettenglieder 52 hergestellt sein, mittels denen die Jalousieelemente 11 der jeweiligen Jalousie 02 jeweils paarweise gelenkig miteinander verbunden sind.

Wichtig ist hervorzuheben, dass die zwischen den Befestigungen bzw. Lagerungen der Jalousieelemente 11 an bzw. im Bereich deren Enden 05 an den gegenüberliegend voneinander beabstandet angeordneten Führungseinrichtungen 04 vorgesehene zusätzliche gelenkige Verbindung als doppelt gelenkige Verbindung 50 und/oder rückensteif ausgeführt sein kann.

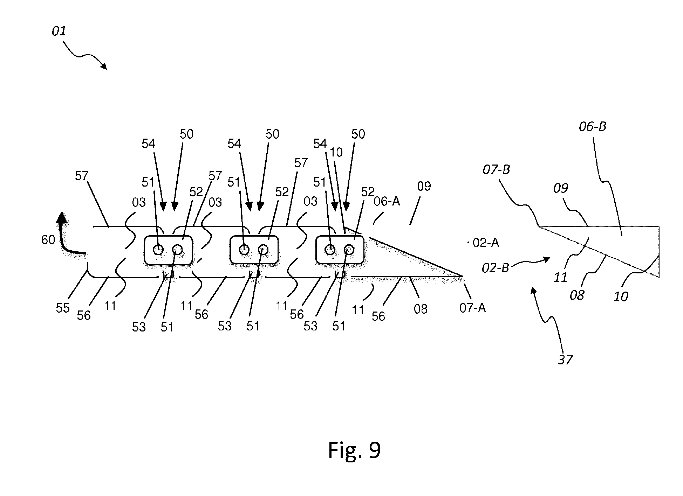

Fig. 9 zeigt ein Ausführungsbeispiel einer rückensteif ausgeführten, doppelt gelenkigen Verbindung 50 zwischen benachbarten Jalousieelementen 11 einer Jalousie 02 eines Jalousieverschlusses 01. Die Jalousieelemente 11 umfassen den keilförmigen Profilstab 06 nebst den Lamellen 03 der jeweiligen Jalousie 02. Die doppelt gelenkige Verbindung 50 zeichnet sich aus durch ein jeweils mit zwei benachbarten Jalousieelementen 11 über Gelenkachsen 51 gelenkig verbundenes Kettenglied 52.

Eine rückensteife Ausführung wird erhalten, indem eine einseitig wirkende Sperre zwischen benachbart gelenkig miteinander verbundenen Jalousieelementen 11 vorgesehen wird, beispielsweise ein einseitig zur Achse einer gelenkigen Verbindung versetzt angeordneten Vorsprung. Bei einer in Fig. 9 dargestellten doppelt gelenkigen Verbindung 50 wird dies durch ein beispielsweise normal auf einer durch die beiden Gelenkachsen 51 eines Kettenglieds 52 gebildeten Ebene einseitig aufstehendes Sperrelement 53 erhalten. Das Sperrelement 53 kann hierzu fest oder auch gelenkig mit dem Kettenglied 52 verbunden sein. Hierdurch wird eine rückensteife gelenkige Verbindung 54 erhalten, bei der es sich gemäß der in Figur 9 dargestellten Ausgestaltung um eine rückensteif ausgeführte doppelt gelenkige Verbindung 50 handelt.

Die rückensteife gelenkige Verbindung 54 zeichnet sich dabei dadurch aus, dass sie ausgehend von einer wie in Fig. 9 dargestellt in einer Ebene liegenden Jalousie 02-A eine gegenseitige Verdrehung benachbarter Lamellen 03 nur in einer ersten Richtung erlaubt. Bei dieser ersten Richtung handelt es sich um diejenige Richtung, der die gelenkige Verbindung 54 folgt, wenn zunächst an einem die Vorderkante 07 der Jalousie 02-A bildenden oder umfassenden, keilförmigen Profilstab 06-A oder an einer die Hinterkante 55 der Jalousie 02-A bildenden Lamelle 03 begonnen wird, diese Lamelle 03 oder diesen keilförmigen Profilstab 06-A an der eben daliegenden Jalousie 02-A wie durch den Pfeil 60 in Fig. 9 angedeutet, nach oben weg zu ziehen, beispielsweise bei einem beginnenden Aufrollen der Jalousie 02-A. In entgegengesetzter, zweiter Richtung ist die gelenkige Verbindung 54 bei der Ausführung als rückensteife gelenkige Verbindung 54 demgegenüber gesperrt. Mit anderen Worten erlaubt eine rückensteife Ausführung einer gelenkigen Verbindung 54 ausgehend von einer eben daliegenden Jalousie 02, bei der die Tangenten von gemeinsam eine beispielsweise einem Aufnahmeraum 36 zugewandte Partie 57 der Oberseite der Jalousie 02 bildenden Oberseiten benachbarter Jalousieelemente 11 einen Winkel von 180° einschließen, eine Gelenkigkeit im theoretischen Bereich zwischen 0°und 180°, wohingegen der Bereich von über 180° bis 360° gesperrt ist. Im praktischen Fall können 0° dabei nur durch eine doppelte gelenkige Verbindung 50 verwirklicht werden.

Durch eine zwischen den Befestigungen bzw. Lagerungen der Jalousieelemente 11 an bzw. im Bereich deren Enden 05 an den gegenüberliegend voneinander beabstandet angeordneten Führungseinrichtungen 04 vorgesehene gelenkige Verbindung untereinander wird eine gegenseitige Stützung und Versteifung erhalten. Hierdurch wird ein Verhaken von Artikeln 31 mit einzelnen Jalousieelementen 11 einer oder beider Jalousien 02 des Jalousieverschlusses 01 aufgrund unterschiedlicher Durchbiegungen benachbarter Jalousieelemente 11 der selben Jalousie 02 wirkungsvoll verhindert. Durch die in Schließstellung einander überlappenden, keilförmigen Profilstäbe 06 wird darüber hinaus ein Verhaken am Übergang zwischen den beiden Jalousien 02 des Jalousieverschlusses 01 wirkungsvoll verhindert.

Eine besonders wirkungsvolle Verhinderung eines Verhakens im Bereich des Übergangs zwischen den beiden Jalousien 02 in Schließstellung wird erhalten, wenn sich die Beladeöffnung 39 auf derjenigen Seite der Entladeöffnung 37 befindet, in welche die zweite Jalousie 02-B mit dem deren Vorderkante 07-B bildenden, zweiten keilförmigen Profilstab 06-B, dessen dem Aufnahmeraum 36 zugewandte Oberseite 09 zumindest frei von Durchbiegung idealisiert betrachtet in einer von der Oberseite zumindest einer Partie 57 der Jalousien 02 des Jalousieverschlusses 01 in dessen Schließstellung gebildeten Ebene liegt, aus der Schließstellung in die Offenstellung zurückgezogen wird. Hierdurch wird ein Verhaken noch wirkungsvoller verhindert, weil sich hierbei beim Überschieben von Artikeln 31 der die Vorderkante 07-B der zweiten Jalousie 02-B bildende, zweite keilförmige Profilstab 06-B auf dem in Schließstellung des Jalousieverschlusses 01 darunter befindlichen, überlappenden und die Vorderkante 07-A der ersten Jalousie 02-A des Jalousieverschlusses 01 bildenden, ersten keilförmigen Profilstab 06-A abstützen kann, so dass es zu keiner unterschiedlichen Durchbiegung zwischen dem zweiten keilförmigen Profilstab 06-B und dem ersten keilförmigen Profilstab 06-A kommt.

Um das Überschieben von Artikeln 31 über die Jalousien 02 des Jalousieverschlusses 01 in dessen Schließstellung zu erleichtern, können wenigstens bei einer Jalousie 02 zumindest in eine beim Umgang mit Artikeln 31 diesen zugewandte, eine beispielsweise einem Aufnahmeraum 36 zugewandte Partie 57 der Oberseite der Jalousie 02 bildenden Oberfläche wenigstens eines Teils deren Jalousieelemente 11, Lagermittel eingearbeitet sein. Bei den Lamellen 03 kann es sich hierbei um beispielsweise plattenartige oder als Hohlprofile ausgestaltete Profilstäbe handeln, in deren einem Aufnahmeraum 36 zugewandte Partien 57 der Oberseiten der Lamellen 03 Lagermittel eingearbeitet sein können.

Als Lagermittel kommen beispielsweise wenigstens bei einem Teil der Jalousieelemente 11 zumindest einer Jalousie 02 um zumindest parallel zur Erstreckung der Jalousieelemente 11 verlaufende Achsen drehbare Rollen und/oder Kugeln in Frage.

Denkbar ist auch, dass es sich bei den Lamellen 03 wenigstens einer Jalousie 02 um als Rollen wirkende, sowohl beidseitig mit den Führungselementen 04 drehbar verbundene, als auch gegebenenfalls zwischen den Führungseinrichtungen 04 drehbar miteinander verbundene Rundstäbe handelt.

In der Offenstellung klafft zwischen den durch die beiden keilförmigen Profilstäbe 06 gebildeten oder umfassten Vorderkanten 07 der beiden gegenläufig beweglichen Jalousien 02 eine Entladeöffnung 37 in deren maximaler Erstreckung. In der Schließstellung ist die Entladeöffnung 37 vollständig durch die beiden Jalousien 02 geschlossen. Die Jalousien 02 können sich in der Schließstellung in der Mitte der Entladeöffnung 37 treffen bzw. gegenseitig überlappen, oder sie können sich außermittig treffen bzw. gegenseitig überlappen.

Ein in Fig. 1, Fig. 2, Fig. 3, Fig. 4, Fig. 5 und Fig. 9 ganz oder in Teilen dargestellter Jalousieverschluss 01 ist zur Verwendung in Verbindung mit einem Eingangs beschriebenen und/oder in Fig. 6, Fig. 7 und Fig. 8 ganz oder in Teilen dargestellten Jalousiekopf 30 geeignet.

Ein in Fig. 6, Fig. 7 und Fig. 8 ganz oder in Teilen dargestellten Jalousiekopf 30 zum Umgang mit Artikeln 31 umfasst einen von einer Oberseite 32, einer Unterseite 32 sowie die Oberseite 32 und die Unterseite 33 miteinander verbindenden, gegenüberliegenden Schmalseiten 34 und Stirnseiten 35 umgebenen Aufnahmeraum 36 für einen oder mehrere Artikel 31. Die Unterseite 33 weist eine vermittels zweier gegenläufig beweglicher Jalousien 02 eines zuvor beschriebenen Jalousieverschlusses 01 verschließbare Entladeöffnung 37 auf. Darüber hinaus umfasst der Jalousiekopf 30 wenigstens eine an zumindest einer der Stirnseiten 35 angeordnete Beladeöffnung 39. Beidseits der Entladeöffnung 37 sind Führungseinrichtungen 04 des Jalousieverschlusses 01 einander gegenüberliegend angeordnet. Befinden sich die beiden gegenläufig beweglichen Jalousien 02 des Jalousieverschlusses 01 in deren Offenstellung, ist die Entladeöffnung 37 geöffnet und frei durchgängig. In einer Schließstellung der beiden gegenläufig beweglichen Jalousien 02, bei der die Entladeöffnung 37 an der Unterseite 33 geschlossen ist, werden ein oder mehrere in den Aufnahmeraum eingebrachte Artikel 31 bis zum Entladen des Jalousiekopfs 30 von den beiden in Schließstellung befindlichen Jalousien 02 getragen. Mindestens ein Artikel 31 wird in den Aufnahmeraum 36 eingebracht, indem der mindestens eine Artikel 31 durch die Beladeöffnung 39 hindurch über die in Schließstellung befindlichen Jalousien 02 des Jalousieverschlusses 01 geschoben wird. Durch ein gegensinniges Wegziehen der beiden Jalousien 02 unter dem mindestens einen in den Aufnahmeraum 36 eingebrachten Artikel 31 in entgegengesetzten Richtungen wird der Jalousiekopf 30 entladen.

Beispielsweise eine vorzugsweise entweder wie in Fig. 6, Fig. 7 und Fig. 8 dargestellt an der Oberseite 32, oder an der oder an wenigstens einer der beiden Schmalseiten 34 angeordnete Kupplungsvorrichtung 38 dient der vorzugsweise lösbaren Verbindung mit einer Verbringungsvorrichtung 42, beispielsweise mindestens einem an einem horizontalen Querträger verfahrbaren Schlitten oder einem Hubwerk oder einem mehrachsig beweglicher Roboterarm, um nur einige denkbare Ausgestaltungen zu nennen. Grundsätzlich sind auch andere Verbindungen zwischen Jalousiekopf 30 und Verbringungsvorrichtung denkbar.

Bei einem mit einem zuvor beschriebenen, erfindungsgemäßen Jalousieverschluss 01 ausgestatteten Jalousiekopf 30 sind in der Schließstellung des Jalousieverschlusses 01 die Oberseiten 09 der die Vorderkanten 07 der beiden gegenläufig beweglichen Jalousien 02 bildenden oder umfassenden, keilförmigen Profilstäbe 06 dem Aufnahmeraum 36 zu- und die Unterseiten 08 der beiden keilförmigen Profilstäbe 06 dem Aufnahmeraum 36 abgewandt.

Zumindest frei von Durchbiegung idealisiert betrachtet, liegt demnach die in Schließstellung des Jalousieverschlusses 01 dem Aufnahmeraum 36 abgewandte Unterseite 08 eines ersten, eine Vorderkante 07-A einer ersten Jalousie 02-A bildenden keilförmigen Profilstabs 06-A in einer von der Unterseite zumindest einer Partie 56 der Jalousieelemente 11 der Jalousien 02 des Jalousieverschlusses 01 in dessen Schließstellung gebildeten Ebene. Die in Schließstellung des Jalousieverschlusses 01 dem Aufnahmeraum 36 zugewandte Oberseite 09 des ersten, die Vorderkante 07-A der ersten Jalousie 02-A bildenden keilförmigen Profilstabs 06-A ist von dessen den Lamellen 03 der ersten Jalousie 02-A zugewandter Hinterseite 10 zur die Vorderkante 07-A der ersten Jalousie 02-A bildenden oder umfassenden Vorderseite von der Dicke der Jalousie 02 abnehmend beispielsweise spitz zulaufend angeschrägt.

Ebenfalls zumindest frei von Durchbiegung idealisiert betrachtet, liegt ferner die in Schließstellung des Jalousieverschlusses 01 dem Aufnahmeraum 36 zugewandte Oberseite 09 eines zweiten, eine Vorderkante 07-B einer zweiten Jalousie 02-B bildenden keilförmigen Profilstabs 06-B in einer von der Oberseite zumindest einer Partie 57 der Jalousieelemente 11 der Jalousien 02 des Jalousieverschlusses 01 in dessen Schließstellung gebildeten Ebene. Die in Schließstellung des Jalousieverschlusses 01 dem Aufnahmeraum 36 abgewandte Unterseite 08 des zweiten, die Vorderkante 07-B der zweiten Jalousie 02-B bildenden keilförmigen Profilstabs 06-B ist von dessen den Lamellen 03 der zweiten Jalousie 02-B zugewandter Hinterseite 10 zur die Vorderkante der zweiten Jalousie 02-B bildenden Vorderseite von der Dicke der Jalousie 02 abnehmend beispielsweise spitz zulaufend angeschrägt.

In der Schließstellung überlappen die beiden keilförmigen Profilstäbe 06-A, 06-B einander.

Fig. 6 zeigt dabei eine gleichzeitige Zuführung von unter dem oder den im Aufnahmeraum transportierten Artikeln 31 beispielsweise beim Aufstapeln auf einen Stapel an einem Stapelplatz zu platzierende Zwischenlagen 40, die vermittels einer gesonderten Transporteinrichtung 41 unter den Jalousiekopf 30 zugeführt werden. An der Unterseite 33 des Jalousiekopfs 30 und/oder an der Unterseite der beiden Jalousien 02 können beispielsweise Sauggreifer angeordnet sein, welche die Zwischenlage 40 ansaugen, so dass diese dann vom Jalousiekopf 30 mit zum Stapelplatz transportiert und gleichzeitig mit oder vor dem Entladen des Jalousiekopfs 30 unter dem oder den im Aufnahmeraum transportierten Artikeln 31 auf den Stapel aufgelegt wird.

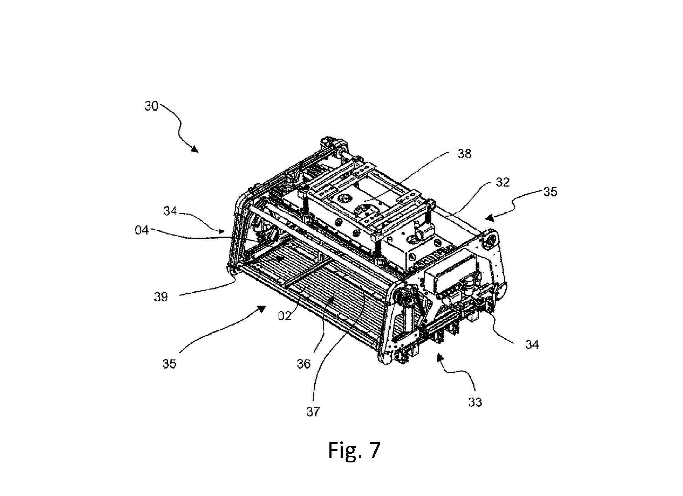

Fig. 7 zeigt dabei einen Jalousiekopf 30 dessen Entladeöffnung 37 an der Unterseite 33 momentan von den beiden gegenläufig beweglichen Jalousien 02 eines Jalousieverschlusses 01 geschlossen ist. Der Jalousiekopf 30 ist dadurch bereit, durch die an einer seiner Stirnseiten 35 vorgesehene Beladeöffnung 39 beladen zu werden.

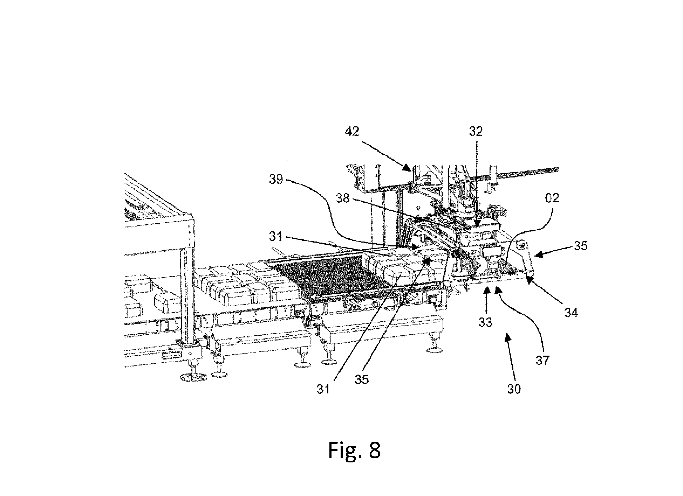

Fig. 8 zeigt, wie ein Jalousiekopf 30, dessen Entladeöffnung 37 an der Unterseite 33 momentan von zwei gegenläufigen Jalousien 02 eines Jalousieverschlusses 01 geschlossen ist, durch die an einer seiner Stirnseiten 35 vorgesehene Beladeöffnung 39 beladen wird. Dabei werden Artikel 31 durch die Beladeöffnung 39 hindurch auf die Jalousien 02 des in Schließstellung befindlichen Jalousieverschlusses 01 in den Aufnahmeraum 36 geschoben. Die beiden Jalousien 02 tragen dabei die Artikel 31 bis zum Entladen des Jalousiekopfs 30, bei dem die Jalousien 02 dann in entgegengesetzten Richtungen voneinander weg unter den im Aufnahmeraum 36 befindlichen Artikeln 31 weggezogen werden.

Wichtig ist hervorzuheben, dass sich die Beladeöffnung 39 vorzugsweise auf derjenigen Seite der Entladeöffnung 37 befindet, in welche die zweite Jalousie 02-B mit dem deren Vorderkante 07-B bildenden oder umfassenden, zweiten keilförmigen Profilstab 06-B, dessen dem Aufnahmeraum 36 zugewandte Oberseite 09 zumindest frei von Durchbiegung idealisiert betrachtet in einer von der Oberseite zumindest einer Partie 57 der Jalousieelemente 11 der Jalousien 02 des Jalousieverschlusses 01 in dessen Schließstellung gebildeten Ebene liegt, aus der Schließstellung in die Offenstellung zurückgezogen wird. Hierdurch wird ein Verhaken von Artikeln 31 bei deren Einbringung durch die Beladeöffnung 39 hindurch in den Aufnahmeraum 36, bei welcher Einbringung die Artikel 31 über die Jalousien 02 des Jalousieverschlusses 01 in Schließstellung geschoben werden, besonders wirkungsvoll verhindert, weil sich hierbei beim Überschieben von Artikeln 31 der die Vorderkante der zweiten Jalousie 02-B bildende, zweite keilförmige Profilstab 06-B auf dem in Schließstellung des Jalousieverschlusses 01 darunter befindlichen, überlappenden und die Vorderkante 07-A der ersten Jalousie 02-A des Jalousieverschlusses 01 bildenden oder umfassenden, ersten keilförmigen Profilstab 06-A abstützen kann, so dass es zu keiner unterschiedlichen Durchbiegung zwischen dem ersten keilförmigen Profilstab 06-A und dem zweiten keilförmigen Profilstab 06-B über die Übergangsstelle zwischen den beiden Jalousien 02 hinweg kommt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

Die Erfindung ist beispielsweise bei der Herstellung und dem Betrieb von Anlagen zum Umgang mit Artikeln gewerblich anwendbar.

### Bezugszeichenliste

- 01: Jalousieverschluss
- 02: Jalousie (allgemeines Bezugszeichen)
- 02-A: erste Jalousie (spezielles Bezugszeichen)
- 02-B: zweite Jalousie (spezielles Bezugszeichen)
- 03: Lamelle
- 04: Führungseinrichtung (allgemeines Bezugszeichen)
- 04-A: Führungseinrichtung der ersten Jalousie (spezielles Bezugszeichen)
- 04-a: Führungseinrichtung der ersten Jalousie (spezielles Bezugszeichen)
- 04-B: Führungseinrichtung der zweiten Jalousie (spezielles Bezugszeichen)
- 04-b: Führungseinrichtung der zweiten Jalousie (spezielles Bezugszeichen)
- 05: Ende
- 06: keilförmiger Profilstab (allgemeines Bezugszeichen)
- 06-A: keilförmiger Profilstab der ersten Jalousie (spezielles Bezugszeichen)
- 06-B: keilförmiger Profilstab der zweiten Jalousie (spezielles Bezugszeichen)
- 07: Vorderkante (allgemeines Bezugszeichen)
- 07-A: Vorderkante der ersten Jalousie (spezielles Bezugszeichen)
- 07-B: Vorderkante der zweiten Jalousie (spezielles Bezugszeichen)
- 08: Unterseite
- 09: Oberseite
- 10: Hinterseite
- 11: Jalousieelement
- 12: Stelle
- 30: Jalousiekopf
- 31: Artikel
- 32: Oberseite
- 33: Unterseite
- 34: Schmalseite
- 35: Stirnseite
- 36: Aufnahmeraum
- 37: Entladeöffnung
- 38: Kupplungsvorrichtung
- 39: Beladeöffnung
- 40: Zwischenlage
- 41: Transporteinrichtung
- 42: Verbringungsvorrichtung
- 50: doppelt gelenkige Verbindung
- 51: Gelenkachse
- 52: Kettenglied
- 53: Sperrelement
- 54: rückensteife gelenkige Verbindung
- 55: Hinterkante
- 56: Partie der Unterseite der Jalousie
- 57: Partie der Oberseite der Jalousie
- 60: Pfeil

## Patentansprüche

1. Jalousieverschluss (01) mit mindestens einem Paar einander gegenüberliegend voneinander beabstandet angeordneten Führungseinrichtungen (04) sowie zwei entlang einer durch die Führungseinrichtungen (04) vorgegebenen Führungsbahn aus einer Schließstellung in eine Offenstellung und umgekehrt gegenläufig beweglichen Jalousien (02), von denen jede Jalousie (02) aus mehreren im Bereich ihrer Enden (05) jeweils an einer der beiden gegenüberliegend voneinander beabstandet angeordneten Führungseinrichtungen (04) angeordneten, parallel zueinander verlaufenden Lamellen (03) besteht, welche untereinander zumindest im Bereich ihrer Enden (05) gelenkig verbunden sind, sowie jede der beiden Jalousien (02) einen keilförmigen Profilstab (06) aufweist, wobei jeder der keilförmigen Profilstäbe (06) eine der Vorderkanten (07) der beiden gegenläufig beweglichen Jalousien (02) bildet oder umfasst,
**dadurch gekennzeichnet, dass**:
- die Unterseite (08) eines ersten, eine Vorderkante (07-A) einer ersten Jalousie (02-A) bildenden oder umfassenden, keilförmigen Profilstabs (06-A) in einer von der Unterseite zumindest einer Partie (56) der Jalousien (02) des Jalousieverschlusses (01) in dessen Schließstellung gebildeten Ebene liegt und dessen Oberseite (09) von dessen den Lamellen (03) der ersten Jalousie (02-A) zugewandter Hinterseite (10) zur die Vorderkante (07-A) der ersten Jalousie (02-A) bildenden Vorderseite von der Dicke der Jalousie (02) abnehmend angeschrägt ist,
- die Oberseite (09) eines zweiten, eine Vorderkante (07-B) einer zweiten Jalousie (02-B) bildenden oder umfassenden, keilförmigen Profilstabs (06-B) zumindest in der Schließstellung in einer von der Oberseite zumindest einer Partie (57) der Jalousien (02) des Jalousieverschlusses (01) in dessen Schließstellung gebildeten Ebene liegt und dessen Unterseite (08) von dessen den Lamellen (03) der zweiten Jalousie (02-B) zugewandter Hinterseite (10) zur die Vorderkante (07-B) der zweiten Jalousie (02-B) bildenden Vorderseite von der Dicke der Jalousie (02) abnehmend angeschrägt ist, und
- in der Schließstellung die beiden keilförmigen Profilstäbe (06) einander überlappen.

2. Jalousiekopf (30) zum Umgang mit Artikeln (31), umfassend einen von einer Oberseite (32), einer Unterseite (33) sowie die Ober- (32) und die Unterseite (33) miteinander verbindenden, gegenüberliegenden Schmal- (34) und Stirnseiten (35) umgebenen Aufnahmeraum (36) für einen oder mehrere Artikel (31), wobei:
- wenigstens eine der Stirnseiten (35) eine Beladeöffnung (39) aufweist,
- die Unterseite (33) eine vermittels zweier gegenläufig beweglicher Jalousien (02) eines Jalousieverschlusses (01) verschließbare Entladeöffnung (37) aufweist, beidseits welcher Entladeöffnung (37) Führungseinrichtungen (04) des Jalousieverschlusses (01) einander gegenüberliegend angeordnet sind,
- befinden sich die beiden gegenläufig beweglichen Jalousien (02) in deren Offenstellung, die Entladeöffnung (37) geöffnet ist,
- befinden sich die beiden gegenläufig beweglichen Jalousien (02) in deren Schließstellung, die Entladeöffnung (37) geschlossen ist,
- mindestens ein Artikel (31) durch die Beladeöffnung (39) hindurch über die in Schließstellung befindlichen Jalousien (02) des Jalousieverschlusses (01) geschoben in den Aufnahmeraum (36) eingebracht wird,
- mindestens ein in den Aufnahmeraum (36) eingebrachter Artikel (31) bis zum Entladen des Jalousiekopfs (30) von den in Schließstellung befindlichen Jalousien (02) getragen wird und
- durch ein gegensinniges Wegziehen der beiden Jalousien (02) unter dem mindestens einen in den Aufnahmeraum (36) eingebrachten Artikel (31) der Jalousiekopf (30) entladen wird,
**gekennzeichnet durch**
einen Jalousieverschluss (01) nach Anspruch 1, wobei in der Schließstellung des Jalousieverschlusses (01) die Oberseiten (09) der die Vorderkanten (07) der beiden gegenläufig beweglichen Jalousien (02) bildenden oder umfassenden, keilförmigen Profilstäbe (06) dem Aufnahmeraum (36) zu- und die Unterseiten (08) der beiden Profilstäbe (06) dem Aufnahmeraum (36) abgewandt sind.

3. Jalousieverschluss nach Anspruch 1 oder Jalousiekopf nach Anspruch 2,
**dadurch gekennzeichnet,**
**dass** die angeschrägte Oberseite (09) des ersten keilförmigen Profilstabs (06-A) in der Schließstellung mit der angeschrägten Unterseite (08) des zweiten keilförmigen Profilstabs (06-B) in Kontakt steht.

4. Jalousieverschluss nach Anspruch 1 oder 3,
**dadurch gekennzeichnet,**
**dass** der zweite keilförmige Profilstab (06-B) um eine parallel zur Erstreckung der Lamellen (03) verlaufende Achse schwenkbar an den gegenüberliegenden Führungseinrichtungen (04) und/oder an einer benachbarten Lamelle (03) angeordnet ist, wobei dessen über dessen Oberseite (09) mit dessen Hinterseite (10) verbundene, die Vorderkante (07-B) der zweiten Jalousie (02-B) bildende oder umfassende Vorderseite wenigstens unter der Gewichtskraft von vermittels des Jalousieverschlusses (01) zumindest zeitweilig getragenen Artikeln (31) beim Verlassen der Schließstellung um den zwischen seiner Oberseite (09) und Unterseite (08) eingeschlossenen Winkel um die Hinterseite (10) abschwenkbar ist.

5. Jalousieverschluss nach einem der Ansprüche 1 oder 3 bis 4,
**dadurch gekennzeichnet,**
**dass** zumindest bei einer Jalousie (02) zumindest ein Teil deren Jalousieelemente (11), welche sowohl die Lamellen (03) der jeweiligen Jalousie (02), als auch den die Vorderkante (07) der jeweiligen Jalousie (02) bildenden oder umfassenden, keilförmigen Profilstab (06) umfassen, zusätzlich an mindestens einer Stelle (06) zwischen ihren mit den Führungseinrichtungen (04) verbundenen Enden (05) gelenkig miteinander verbunden sind.

6. Jalousieverschluss nach Anspruch 5,
**dadurch gekennzeichnet,**
**dass** wenigstens bei einer Jalousie (02) zumindest ein Teil deren Jalousieelemente (11) zwischen ihren mit den Führungselementen (04) verbundenen Enden (05) zusätzlich durch Kettenglieder (52) jeweils paarweise gelenkig miteinander verbunden sind.

7. Jalousieverschluss nach Anspruch 5 oder 6,
**gekennzeichnet durch**
eine rückensteife Ausführung zumindest der an mindestens einer Stelle (06) zwischen den mit den Führungseinrichtungen (04) verbundenen Enden (05) zumindest eines Teils der Jalousieelemente (11) wenigstens bei einer Jalousie (02) vorgesehenen zusätzlichen gelenkigen Verbindung (54).

8. Jalousieverschluss nach einem der voranstehenden Ansprüche 1 oder 3 bis 7,
**gekennzeichnet durch**
wenigstens bei einer Jalousie (02) zumindest in eine beim Umgang mit Artikeln (31) diesen zugewandte Oberfläche (57) wenigstens eines Teils deren Jalousieelemente (11), welche sowohl die Lamellen (03) der jeweiligen Jalousie (02), als auch den die Vorderkante (07) der jeweiligen Jalousie (02) bildenden oder umfassenden, keilförmigen Profilstab (06) umfassen, eingearbeitete Lagermittel.

9. Jalousieverschluss nach Anspruch 8,
**gekennzeichnet durch**
wenigstens bei einem Teil der Jalousieelemente (11) zumindest einer Jalousie (02) um zumindest parallel zur Erstreckung der Jalousieelemente (11) verlaufende Achsen drehbare Rollen und/oder Kugeln als Lagermittel.

10. Jalousieverschluss nach einem der voranstehenden Ansprüche 1 oder 3 bis 9,
**dadurch gekennzeichnet,**
**dass** es sich bei den Lamellen (03) wenigstens einer Jalousie um als Rollen wirkende, sowohl beidseitig mit den Führungselementen (04) drehbar verbundene, als auch zwischen den Führungseinrichtungen (04) drehbar miteinander verbundene Rundstäbe handelt.

11. Jalousiekopf nach Anspruch 2,
**dadurch gekennzeichnet,**
**dass** sich die Beladeöffnung (39) auf derjenigen Seite der Entladeöffnung (37) befindet, in welche die zweite Jalousie (02-B) aus der Schließstellung in die Offenstellung zurückgezogen wird.

12. Jalousiekopf nach Anspruch 2 oder 11, mit einem Jalousieverschluss nach einem der Ansprüche 3 bis 10.

## Claims

1. A shutter lock (01) with at least one pair of guiding devices (04) arranged opposite each other and spaced apart from each other and further two shutters (02), which are movable in opposite directions from a locking position to an open position and vice versa along a guide path defined by the guiding devices (04), each of which shutters (02) consists of a plurality of blades (03), which, in the section of their ends (05), run in parallel to each other and are arranged at respectively one of the two guiding devices (04), which are arranged opposite each other and spaced apart from each other, which blades (03) are articulatedly connected with each other at least in the section of their ends (05), and each of the two shutters (02) further has a wedge-shaped profile bar (06), wherein each of the wedge-shaped profile bars (06) forms or comprises one of the front edges (07) of the two shutters (02) that are movable in opposite directions, **characterised in that**:
- the bottom side (08) of a first wedge-shaped profile bar (06-A) forming or comprising a front edge (07-A) of a first shutter (02-A) is located in a plane formed by the bottom side of at least one section (56) of the shutters (02) of the shutter lock (01) in its locking position, and the top side (09) of the profile bar (06-A) is beveled to taper off from the thickness of the shutter (02) from the profile bar's (06-A) rear side (10) facing the blades (03) of the first shutter (02-A) to the front side forming the front edge (07-A) of the first shutter (02-A);
- the top side (09) of a second wedge-shaped profile bar (06-B) forming or comprising a front edge (07-B) of a second shutter (02-B) is, at least in the locking position, located in a plane formed by the top side of at least one section (57) of the shutters (02) of the shutter lock (01) in its locking position, and the bottom side (08) of the profile bar (06-B) is beveled to taper off from the thickness of the shutter (02) from the profile bar's (06-B) rear side (10) facing the blades (03) of the second shutter (02-B) to the front side forming the front edge (07-B) of the second shutter (02-B); and
- the two wedged-shaped profile bars (06) overlap each other in the locking position.

2. A shutter head (30) for handling articles (31), comprising a receiving space (36) for one or more articles (31), which receiving space (36) is encompassed by an upper side (32), a lower side (33) as well as narrow sides (34) and face sides (35) opposite to each other and connecting the upper side (32) and the lower side (33) with each other, wherein:
- at least one of the face sides (35) has a loading opening (39);
- the lower side (33) has an unloading opening (37), which is lockable by means of two shutters (02) of a shutter lock (01), which shutters (02) are movable in opposite directions, on both sides of which unloading opening (37) guiding devices (04) of the shutter lock (01) are arranged opposite each other;
- the unloading opening (37) is open when the two shutters (02) that are movable in opposite directions are in their open position;
- the unloading opening (37) is locked when the two shutters (02) that are movable in opposite directions are in their locking position,
- at least one article (31) is introduced into the receiving space (36) through the loading opening (39) by pushing the article (31) over the shutters (02) of the shutter lock (01) with the shutters (02) being in the locking position;
- at least one article (31) having been introduced into the receiving space (36) is supported by the shutters (02) being in the locking position until unloading the shutter head (30); and
- the shutter head (30) is unloaded by pulling away in opposite directions the two shutters (02) under the at least one article (31) having been introduced into the receiving space (36);
**characterised by** a shutter lock (01) as recited in claim 1 wherein, in the locking position of the shutter lock (01), the top sides (09) of the wedge-shaped profile bars (06) forming or comprising the front edges (07) of the two shutters (02) that are movable in opposite directions face toward the receiving space (36), and the bottom sides (08) of the two profile bars (06) are averted from the receiving space (36).

3. The shutter lock as recited in claim 1 or the shutter head as recited in claim 2, **characterised in that** the beveled top side (09) of the first wedge-shaped profile bar (06-A) is in contact with the beveled bottom side (08) of the second wedge-shaped profile bar (06-B) in the locking position.

4. The shutter lock as recited in claim 1 or 3, **characterised in that** the second wedge-shaped profile bar (06-B) is arranged at the guiding devices (04), which are located opposite, to be pivotable about an axis running in parallel to the extension of the blades (03) and/or is arranged at an adjacent blade (03), wherein, when the locking position is being left, the front side of the profile bar (06-B) forming or comprising the front edge (07-B) of the second shutter (02-B), which front side of the profile bar (06-B) is connected with the rear side (10) of the profile bar (06-B) via the top side (09) of the profile bar, is pivotable downward about the rear side (10) by the angle enclosed between the top side (09) and the bottom side (08) of the profile bar (06-B), at least under the weight force of articles (31) being at least temporarily supported by means of the shutter lock (01).

5. The shutter lock as recited in one of the claims 1 or 3 to 4, **characterised in that** at least a part of the shutter elements (11) of at least one shutter (02), which shutter elements (11) comprise both the blades (03) of the respective shutter (02) and the wedge-shaped profile bar (06) forming or comprising the front edge (07) of the respective shutter (02), are additionally articulatedly connected with each other in at least one position (06) between the ends (05) of the shutter elements (11), which are connected with the guiding devices (04).

6. The shutter lock as recited in claim 5, **characterised in that** at least in the instance of one shutter (02) at least a part of its shutter elements (11) are additionally articulatedly connected with each other, in each case pair-wise, by chain links (52), between the ends (05) of the shutter elements (11), which are connected with the guiding elements (04).

7. The shutter lock as recited in claim 5 or 6, **characterised by** a rigid back design, at least of the articulated connection (54) additionally provided in at least one position (06) between the ends (05) of at least a part of the shutter elements (11) of at least one shutter (02), which ends (05) are connected with the guiding devices (04).

8. The shutter lock as recited as recited in one of the previous claims 1 or 3 to 7, **characterised by** bearing means, which are included at least in the surface (57) facing the articles (31) during the handling of these articles (31) of at least a part of the shutter elements (11) of at least one shutter (02), which shutter elements comprise both the blades (03) of the respective shutter (02) and the wedge-shaped profile bar (06) forming or comprising the front edge (07) of the respective shutter (02).

9. The shutter lock as recited in claim 8, **characterised by** rollers and/or balls as bearing means for at least a part of the shutter elements (11) of at least one shutter (02), which rollers and/or balls are at least rotatable about axes running in parallel to the extension of the shutter elements (11).

10. The shutter lock as recited as recited in one of the previous claims 1 or 3 to 9, **characterised in that** the blades (03) of at least one shutter are round bars acting as rollers, which are both rotatably connected on both sides with the guiding elements (04) and rotatably connected with each other between the guiding devices (04).

11. The shutter head as recited in claim 2, **characterised in that** the loading opening (39) is located on that side of the unloading opening (37) into which the second shutter (02-B) is retracted from the locking position to the open position.

12. The shutter head as recited in claim 2 or 11, with a shutter lock as recited in claim 3 to 10.

## Revendications

1. Fermeture à jalousie (01) comprenant au moins une paire de dispositifs de guidage (04) disposés en regard l'un de l'autre et espacés l'un de l'autre ainsi que deux jalousies (02) qui sont déplaçables de manière opposée, le long d'une glissière définie par lesdits dispositifs de guidage (04), depuis une position de fermeture dans une position ouverte et vice versa et dont chaque jalousie (02) se compose d'une pluralité de lamelles (03) lesquelles sont disposées, au niveau de leurs extrémités (05), respectivement sur l'un des deux dispositifs de guidage (04) disposés en regard et espacés l'un de l'autre et s'étendent parallèlement entre elles et lesquelles sont reliées entre elles de manière articulée au moins au niveau de leurs extrémités (05), et chacune des deux jalousies (02) présente une barre profilée (06) en forme de coin, chacune des barres profilées (06) en forme de coin formant ou comprenant l'un des bords avant (07) des deux jalousies (02) déplaçables de manière opposée, **caractérisée par le fait que**:
- la face inférieure (08) d'une première barre profilée (06-A) en forme de coin formant ou comprenant un bord avant (07-A) d'une première jalousie (02-A) est située dans un plan formé par la face inférieure d'au moins une partie (56) des jalousies (02) de la fermeture à jalousie (01) dans la position de fermeture de celle-ci, et la face supérieure (09) de celle-ci est biseautée de manière à décroître de l'épaisseur de la jalousie (02), depuis sa face arrière (10) montrant vers les lamelles (03) de la première jalousie (02-A) vers la face avant formant le bord avant (07-A) de la première jalousie (02-A),
- la face supérieure (09) d'une deuxième barre profilée (06-B) en forme de coin formant ou comprenant un bord avant (07-B) d'une deuxième jalousie (02-B) est située, au moins dans la position de fermeture, dans un plan formé par la face supérieure d'au moins une partie (57) des jalousies (02) de la fermeture à jalousie (01) dans la position de fermeture de celle-ci, et la face inférieure (08) de celle-ci est biseautée de manière à décroître de l'épaisseur de la jalousie (02), depuis sa face arrière (10) montrant vers les lamelles (03) de la deuxième jalousie (02-B) vers la face avant formant le bord avant (07-B) de la deuxième jalousie (02-B), et,
- dans la position de fermeture, les deux barres profilées (06) en forme de coin se chevauchent l'une l'autre.

2. Tête à jalousie (30) destinée à manier des articles (31), comprenant un espace de réception (36) pour un ou plusieurs article(s) (31) qui est entouré d'une face supérieure (32), d'une face inférieure (33) ainsi qui de petits côtés (34) et fronts (35) opposés qui relient lesdites faces supérieure (32) et inférieure (33), dans laquelle:
- l'un au moins des fronts (35) présente une ouverture de chargement (39),
- ladite face inférieure (33) présente une ouverture de déchargement (37) qui peut être fermée au moyen de deux jalousies (02) déplaçables de manière opposée d'une fermeture à jalousie (01); de part et d'autre de ladite ouverture de déchargement (37) étant disposés en regard l'un de l'autre des dispositifs de guidage (04) de la fermeture à jalousie (01),
- lorsque les deux jalousies (02) déplaçables de manière opposée se trouvent dans leur position ouverte, ladite ouverture de déchargement (37) est ouverte,
- lorsque les deux jalousies (02) déplaçables de manière opposée se trouvent dans leur position de fermeture, ladite ouverture de déchargement (37) est fermée,
- au moins un article (31) est introduit dans ledit espace de réception (36) à travers ladite ouverture de chargement (39), en étant poussé sur les jalousies (02) de la fermeture à jalousie (01) qui se trouvent en position de fermeture,
- au moins un article (31) introduit dans ledit espace de réception (36) est porté par les jalousies (02) se trouvant en position de fermeture, jusqu'à ce que la tête à jalousie (30) soit déchargée, et
- la tête à jalousie (30) est déchargée en retirant en sens opposé les deux jalousies (02) sous ledit au moins un article (31) introduit dans l'espace de réception (36),
**caractérisée par** une fermeture à jalousie (01) selon la revendication 1, dans laquelle, dans la position de fermeture de la fermeture à jalousie (01), les faces supérieures (09) des barres profilées (06) en forme de coin formant ou comprenant les bords avant (07) des deux jalousies (02) déplaçables de manière opposée montrent vers l'espace de réception (36) et les faces inférieures (08) des deux barres profilées (06) montrent dans la direction opposée à l'espace de réception (36).

3. Fermeture à jalousie selon la revendication 1 ou tête à jalousie selon la revendication 2, **caractérisée par le fait que**, dans la position de fermeture, la face supérieure (09) biseautée de la première barre profilée (06-A) en forme de coin est en contact avec la face inférieure (08) biseautée de la deuxième barre profilée (06-B) en forme de coin.

4. Fermeture à jalousie selon la revendication 1 ou 3, **caractérisée par le fait que** la deuxième barre profilée (06-B) en forme de coin est disposée à pivotement autour d'un axe s'étendant parallèlement à l'extension des lamelles (03), sur les dispositifs de guidage (04) en regard et/ou sur une lamelle (03) voisine, sa face avant reliée par sa face supérieure (09) à sa face arrière (10) et formant ou comprenant le bord avant (07-B) de la deuxième jalousie (02-B) pouvant être pivotée vers le bas sur la face arrière (10), de l'angle inclus entre sa face supérieure (09) et sa face inférieure (08), en quittant la position de fermeture, au moins sous la force du poids d'articles (31) portés au moins temporairement au moyen de la fermeture à jalousie (01).

5. Fermeture à jalousie selon l'une quelconque des revendications 1 ou 3 à 4, **caractérisée par le fait que**, dans au moins une jalousie (02), au moins une partie de ses éléments de jalousie (11) qui comprennent aussi bien les lamelles (03) de la jalousie (02) respective que la barre profilée (06) en forme de coin formant ou comprenant le bord avant (07) de la jalousie (02) respective sont reliés de manière articulée entre eux en outre sur au moins un point (06) entre leurs extrémités (05) reliées aux dispositifs de guidage (04).

6. Fermeture à jalousie selon la revendication 5, **caractérisée par le fait que**, dans au moins une jalousie (02), au moins une partie de ses éléments de jalousie (11) sont reliés de manière articulée entre eux, respectivement par paires, en outre par l'intermédiaire de maillons de chaîne (52), entre leurs extrémités (05) reliées aux éléments de guidage (04).

7. Fermeture à jalousie selon la revendication 5 ou 6, **caractérisée par** une configuration rigide dans une direction, de la liaison articulée (54) supplémentaire prévue dans au moins une jalousie (02) sur au moins un point (06) entre les extrémités (05) reliées aux dispositifs de guidage (04), d'au moins une partie des éléments de jalousie (11).

8. Fermeture à jalousie selon l'une quelconque des revendications précédentes 1 ou 3 à 7, **caractérisée par** des moyens formant palier qui sont incorporés, dans au moins une jalousie (02), au moins dans une surface (57) d'au moins une partie de ses éléments de jalousie (11) qui comprennent aussi bien les lamelles (03) de la jalousie (02) respective que la barre profilée (06) en forme de coin formant ou comprenant le bord avant (07) de la jalousie (02) respective, surface (57) qui, lors du maniement d'articles (31), montre vers ceux-ci.

9. Fermeture à jalousie selon la revendication 8, **caractérisée par**, au moins dans une partie des éléments de jalousie (11) d'au moins une jalousie (02), des rouleaux et/ou billes en tant que moyens formant palier, tournant autour d'axes s'étendant au moins parallèlement à l'extension des éléments de jalousie (11).

10. Fermeture à jalousie selon l'une quelconque des revendications précédentes 1 ou 3 à 9, **caractérisée par le fait que**, en ce qui concerne les lamelles (03) d'au moins une jalousie, il s'agit de barres rondes qui agissent comme rouleaux, qui et sont reliées à rotation, de part et d'autre, aux éléments de guidage (04) et sont reliées à rotation entre elles entre les dispositifs de guidage (04).

11. Tête à jalousie selon la revendication 2, **caractérisée par le fait que** ladite ouverture de chargement (39) est située du côté de l'ouverture de déchargement (37) dans lequel la deuxième jalousie (02-B) est rétractée de la position de fermeture dans la position ouverte.

12. Tête à jalousie selon la revendication 2 ou 11, comprenant une fermeture à jalousie selon l'une quelconque des revendications 3 à 10.
